# EUROPÄISCHE PATENTSCHRIFT

(11) **EP 3 870 439 B1**
(45) Veröffentlichungstag und Bekanntmachung des Hinweises auf die Patenterteilung: **18.06.2025**
(21) Anmeldenummer: 19768810.4
(22) Anmeldetag: 12.09.2019
(51) Int. Cl.: B32B 17/10

(54) **VERBUNDSCHEIBE MIT SEGMENTARTIG SCHALTBAREM FUNKTIONSELEMENT MIT ELEKTRISCH STEUERBAREN OPTISCHEN EIGENSCHAFTEN**
LAMINATED GLAZING WITH SEGMENTED FUNCTIONAL ELEMENT WITH ELECTRICALLY DRIVEN OPTICAL PROPERTIES
VITRE FEUILLETÉE DOTÉE D'UN ÉLÉMENT FONCTIONNEL COMMUTABLE PAR SEGMENTS PRÉSENTANT DES PROPRIÉTÉS OPTIQUES À COMMANDE ÉLECTRIQUE

(30) Priorität: 26.10.2018 EP 18202830
(43) Veröffentlichungstag der Anmeldung: 01.09.2021
(73) Patentinhaber: Saint-Gobain Sekurit France, 60150 Thourotte (FR)
(72) Erfinder: DO ROSARIO, Jefferson, 52064 Aachen (DE); MANZ, Florian, 52064 Aachen (DE); SCHURSE, Sebastian, 52531 Übach-Palenberg (DE); WOLF, Johannes, 52072 Aachen (DE)
(74) Vertreter: SGR Germany-Patents
(86) Internationale Anmeldenummer: PCT/EP2019/074401
(87) Internationale Veröffentlichungsnummer: WO 2020/083562

(56) Entgegenhaltungen:
- WO-A1-2017/157626
- US-A1- 2002 044 331
- US-A1- 2016 306 249

## Beschreibung

Die Erfindung betrifft eine Verbundscheibe mit segmentartig schaltbarem Funktionselement mit elektrisch steuerbaren optischen Eigenschaften, ein Verfahren zu deren Herstellung und deren Verwendung.

Zum Blendschutz des Fahrers oder weiterer Insassen verfügen herkömmliche Kraftfahrzeuge über mechanische Sonnenblenden. Diese sind klappbar am Fahrzeugdach montiert und lassen sich bei Bedarf herunterschwenken, um das Blenden des Fahrers oder Beifahrers beispielsweise durch eine tief stehende Sonne zu verhindern oder zumindest abzuschwächen.

Es sind auch Windschutzscheiben bekannt, in die eine Sonnenblende in Form eines Funktionselements mit elektrisch regelbaren optischen Eigenschaften integriert ist, insbesondere mit elektrisch regelbarer Transmission oder Streuverhalten. Damit kann der Fahrer das Transmissionsverhalten der Windschutzscheibe selbst gegenüber Sonnenstrahlung steuern, die herkömmliche mechanische Sonnenblende wird verzichtbar. Dadurch kann das Gewicht des Fahrzeugs reduziert werden und es wird Platz im Dachbereich gewonnen. Zudem ist das elektrische Regeln der Sonnenblende für den Fahrer komfortabler als das manuelle Herunterklappen der mechanischen Sonnenblende.

Elektrisch regelbare Sonnenblenden finden darüber hinaus auch Anwendung in Glasdächern von Kraftfahrzeugen. Insbesondere bei großflächigen Panoramaglasscheiben besteht das Bedürfnis die Transmission der Scheibe variabel zu steuern. Je nach Sonnenstand besteht dabei die Notwendigkeit lediglich Teilbereiche der Scheibe abzublenden, oder auch als Blickschutz im geparkten Fahrzeug die vollständige Fläche intransparent zu schalten.

Ein mögliches elektrisch schaltbares Funktionselement zur Realisierung von regelbaren Sonnenblende ist ein sogenanntes PDLC-Funktionselement (*polymer dispersed liquid crystal*). Die aktive Schicht enthält dabei Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch Herabsetzung der Gesamttransmission, sondern durch Erhöhung der Streuung, um den Blendschutz zu gewährleisten.

Windschutzscheiben mit elektrisch regelbaren Sonnenblenden sind beispielsweise bekannt aus DE 102013001334 A1, DE 102005049081 B3, DE 102005007427 A1 und DE 102007027296 A1. DE 102010021563A1 beschreibt eine Windschutzscheibe mit elektrisch regelbarer Sonnenblende, die in Teilbereichen schaltbar ist, wobei die Abdunkelung der einzelnen Elemente über eine kapazitive Sensoranordnung im Randbereich der Sonnenblende steuerbar ist.

Die elektrische Kontaktierung von elektrisch steuerbaren Funktionselementen erfolgt üblicherweise über Sammelleiter (auch als "bus bars" bezeichnet), die im Randbereich des Funktionselementes auf die Flächenelektroden aufgebracht sind und diese elektrisch leitend kontaktieren. Durch Verbinden der Sammelleiter mit einer externen Spannungsquelle, beispielsweise über an den Sammelleitern angebrachte Flachleiter, wird eine Spannung an den Flächenelektroden angelegt und die aktive Schicht des Funktionselementes geschaltet. Insbesondere bei kleinteiligen einzeln schaltbaren Segmenten ist es schwierig ein homogenes Schaltverhalten bei möglichst geringen Betriebsspannungen und hoher Lebensdauer der elektrischen Kontaktierung zu gewährleisten. Mit geringerer Größe des zu schaltenden Elementes sinkt auch die für die elektrische Kontaktierung der Flächenelektroden mit den Sammelleitern zur Verfügung stehende Fläche. Eine gewisse Inhomogenität der Flächenelektroden im Bereich der Kontaktierungsfläche kann insbesondere bei kleinen Kontaktierungsflächen problematisch sein. Inhomogenitäten der Flächenelektroden treten beispielsweise durch geringe Beschädigungen beim Freilegen der elektrisch leitfähigen Schichten zur anschließenden Kontaktierung auf. Eine solche Beschädigung kann bereits von den Partikeln der aktiven Schicht selbst ausgelöst werden. Bereits die in einer PDLC-Schicht enthaltenen Kristalle genügen um die Flächenelektrode beim Abtragen der auf der Flächenelektrode befindlichen PDLC-Schicht zu verkratzen. Diese Kratzer münden in einer lokal erhöhten Leistungsaufnahme, einer dadurch bedingten Erwärmung und letztlich in einem Versagen des Bauteils. Im Fall von großflächigen Sammelleitern ist der schadhafte Anteil der Kontaktierungsfläche im Vergleich zur Gesamtfläche recht gering. Bei kleiner werdenden Sammelleitern steigt jedoch der Anteil der beschädigten Kontaktfläche, wodurch ein vermehrtes Bauteilversagen zu beobachten ist.

In US 2016/0306249 A1 ist eine Isolierverglasung offenbart, die ein elektrochromes Element umfasst, das mehrere elektrisch unabhängig voneinander schaltbare Bereiche umfasst.

WO 2017/157626 A1 offenbart eine Windschutzscheibe mit PDLC-Funktionselement, wobei das PDLC-Funktionselement segmentweise schaltbar ist.

US 2002/0044331 A1 offenbart ein Substrat mit elektrochromem Element, wobei die Flächenelektroden des elektrochromen Elementes entlang ihres Umfangs mit Sammelleitern versehen sind.

Der vorliegenden Erfindung liegt die Aufgabe zugrunde, eine Verbundscheibe mit segmentartig schaltbarem Funktionselement mit elektrisch steuerbaren optischen Eigenschaften bereitzustellen, das eine verbesserte elektrische Kontaktierung mit erhöhter Lebensdauer bei homogenem Schaltverhalten aufweist.

Die Aufgabe der vorliegenden Erfindung wird durch eine Verbundscheibe mit segmentartig schaltbarem Funktionselement mit elektrisch steuerbaren optischen Eigenschaften gemäß dem unabhängigen Anspruch 1 gelöst. Bevorzugte Ausführungen gehen aus den Unteransprüchen hervor.

Die erfindungsgemäße Verbundscheibe enthält ein segmentartig schaltbares Funktionselement mit elektrisch steuerbaren optischen Eigenschaften, dessen optische Eigenschaften in Abhängigkeit der angelegten Spannung regelbar sind. Das Funktionselement ist in die Zwischenschicht der Verbundscheibe eingelagert. Die Zwischenschicht verbindet dabei die erste Scheibe und die zweite Scheibe der Verbundscheibe. Das regelbare Funktionselement umfasst eine aktive Schicht zwischen einer ersten Flächenelektrode und einer zweiten Flächenelektrode. Die Flächenelektroden und die aktive Schicht sind flächig übereinander angeordnet. Die aktive Schicht weist die regelbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen der ersten Scheibe und der zweiten Scheibe angeordnet. Die Flächenelektroden sind elektrisch leitend mit Sammelleitern verbunden, über die das Funktionselement an einer externen Spannungsquelle angeschlossen werden kann. Um das Funktionselement abschnittsweise, in Form einzelner Segmente, schalten zu können, müssen diese einzeln elektrisch ansteuerbar sein. Dazu ist die erste Flächenelektrode mittels mindestens einer Trennlinie in mehrere Segmente unterteilt. Die Trennlinie kann auch als Isolationslinie bezeichnet werden und bewirkt eine elektrische Trennung der einzelnen Segmente der ersten Flächenelektrode voneinander. Eine Gruppe von ersten Sammelleitern wird verwendet um die erste Flächenelektrode elektrisch leitend zu kontaktieren, wobei jedes Segment der ersten Flächenelektrode von mindestens zwei Sammelleitern aus der Gruppe der ersten Sammelleiter kontaktiert wird. Die zweite Flächenelektrode wird von mindestens einem zweiten Sammelleiter elektrisch leitend kontaktiert. Die erste Flächenelektrode wird über die Gruppe der ersten Sammelleiter mit einem Pol der Spannungsquelle kontaktiert und die zweite Flächenelektrode wird über den mindestens zweiten Sammelleiter mit dem entgegengesetzten Pol der Spannungsquelle kontaktiert. Die Spannungsquelle kann je nach Art des Funktionselementes als Wechselspannungsquelle oder Gleichspannungsquelle ausgestaltet sein.

Unter einer Trennlinie ist im Sinne der Erfindung ein linienförmiger Bereich innerhalb der Flächenelektrode zu verstehen, welcher nicht elektrisch leitfähig ist und welcher sich über die gesamte Dicke der Flächenelektrode erstreckt.

Der erfindungsgemäße Aufbau der Verbundscheibe ermöglicht, dass die aktive Schicht selektiv abschnittsweise geschaltet werden kann, wobei die selektiv schaltbaren Bereiche der aktiven Schicht einer Projektion der Segmente der ersten Flächenelektrode auf die aktive Schicht entsprechen. Zur gezielten Ansteuerung der Segmente werden die gegensätzlichen Pole einer Spannungsquelle je nach gewünschtem Schaltbild der aktiven Schicht mit den Sammelleitern der ersten Flächenelektrode und der zweiten Flächenelektrode verbunden. Ein Pol der Spannungsquelle wird mit dem oder den zweiten Sammelleitern der zweiten Flächenelektrode verbunden, während der entgegengesetzte Pol der Spannungsquelle mit den ersten Sammelleitern, die im Bereich der anzusteuernden Segmente der ersten Flächenelektrode kontaktiert sind, verbunden ist. Eine elektrische Potentialdifferenz zwischen den Flächenelektroden liegt demnach nur in den Bereichen des Funktionselementes vor, in denen die entsprechenden Segmente der ersten Flächenelektrode mit der Spannungsquelle verbunden sind. Demnach wird auch nur in diesen Bereichen die aktive Schicht des Funktionselementes geschaltet. Die Trennlinien zwischen den einzelnen Segmenten der ersten Flächenelektrode stellen sicher, dass kein Stromfluss über andere Segmente der Beschichtung stattfindet. Die gezielte Ansteuerung der Segmente der ersten Flächenelektrode, an denen eine Spannung anzulegen ist, erfolgt beispielsweise über eine externe Steuerungseinheit.

Dadurch, dass jedes Segment der ersten Flächenelektrode erfindungsgemäß von mindestens zwei der ersten Sammelleiter elektrisch kontaktiert ist, kann die Zuverlässigkeit des Funktionselementes wesentlich verbessert werden und das Ausfallrisiko der Verglasung minimiert werden. Insbesondere bei Sammelleitern mit geringer Länge, wie dies bei segmentartig schaltbaren Funktionselementen in der Regel der Fall ist, ist das Ausfallrisiko eines Sammelleiters durch Überhitzung erhöht. Durch Verwendung von mindestens zwei Sammelleitern kann Abhilfe geschaffen werden, da auch bei einem Defekt eines Sammelleiters ein weiterer Sammelleiter zur Schaltung des betreffenden Segments zur Verfügung steht. Darüber hinaus konnten die Erfinder überraschend feststellen, dass bei Verwendung von mindestens zwei ersten Sammelleitern pro Segment der ersten Flächenelektrode die notwendige Betriebsspannung der Anordnung herabgesetzt werden kann. Trotz geringerer Betriebsspannung ist dabei eine Leistungssteigerung zu verzeichnen. In Kraftfahrzeugen ist aufgrund von Sicherheitsaspekten die Betriebsspannung von elektrisch steuerbaren Verglasungen möglichst gering zu halten, so dass eine Verringerung der Betriebsspannung ein entscheidender Vorteil für die Anwendung in Kraftfahrzeugen ist.

Das Funktionselement weist mehrere Seitenkanten, besonders bevorzugt vier Seitenkanten, auf. Das Funktionselement kann jedoch auch mehr als vier Seitenkanten umfassen. Jeweils mindestens zwei Seitenkanten des Funktionselementes liegen sich im Wesentlichen paarweise gegenüber. Bei einer Ausführungsform mit vier Seitenkanten ergeben sich daraus zwei Paare aus jeweils zwei gegenüberliegenden Seitenkanten. Die gegenüberliegenden Seitenkanten eines Funktionselementes können parallel zueinander oder nicht parallel zueinander verlaufen. Die Seitenkanten müssen nicht geradlinig sein, sondern weisen häufig eine Biegung auf. Die Länge gegenüberliegender Seitenkanten kann voneinander abweichen. Beispielsweise kann das Funktionselement einen trapezförmigen Umriss besitzen.

Das Funktionselement weist mehrere Seitenkanten, beispielsweise vier Seitenkanten, auf. Die mindestens zwei ersten Sammelleiter, die dasselbe Segment der ersten Flächenelektrode kontaktieren, sind dabei an einander gegenüberliegenden Seitenkanten des Funktionselementes angeordnet. Die ersten Sammelleiter verlaufen dabei jeweils benachbart zu der entsprechenden ihnen zugeordneten Seitenkante. Dies führt zu einer gleichmäßigeren Spannungsverteilung und somit einem homogeneren Schaltverhalten des Funktionselementes. Handelt es sich bei dem Funktionselement beispielsweise um ein PDLC-Element, so ergeben sich auch Vorteile hinsichtlich einer verminderten Resttrübung im transparent geschalteten Zustand. Die verbleibende Resttrübung im transparenten Zustand ist darüber hinaus gleichmäßiger über die Fläche des Funktionselementes verteilt. Wird hingegen in einer nicht erfindungsgemäßen Ausführungsform nur ein erster Sammelleiter pro Segment verwendet, so ist die Resttrübung in Nachbarschaft dieses Sammelleiters geringer als am gegenüberliegenden Ende dieses Segmentes. Mittels zwei einander gegenüberliegenden ersten Sammelleitern pro Segment der ersten Flächenelektrode wird demnach auch ein optisch ansprechenderes Erscheinungsbild erreicht. Ein derartiger Vorteil tritt nicht nur im Zusammenhang mit PDLC-Elementen auf, sondern analog dazu ist ein ansprechenderes Erscheinungsbild auch bei anderen Funktionselementen zu erwarten.

Die Länge der ersten Sammelleiter beträgt bevorzugt jeweils zwischen 80 % und 100 %, besonders bevorzugt mindestens 95%, der Breite des Segments, das von diesen Sammelleitern kontaktiert wird. Die Breite eines Segments der ersten Flächenelektrode ist dabei als der Abstand zweier benachbarter Trennlinien bzw. bei einem randständigen Segment als der Abstand zwischen der Seitenkante und der nächstliegenden Trennlinie definiert. Die Trennlinien und die ersten Sammelleiter stehen bevorzugt in einem Winkel von 70° bis 110° zueinander, besonders bevorzugt sind diese in einem Winkel von 90° ± 5° zueinander angeordnet. Dadurch, dass die ersten Sammelleiter 80 % bis 100 % der Segmentbreite überspannen, wird die Länge der ersten Sammelleiter innerhalb eines Segments maximiert. Dies ist vorteilhaft um eine möglichst große Robustheit der ersten Sammelleiter und eine gute Spannungsverteilung zu erreichen.

Die Segmente der ersten Flächenelektrode sind im Wesentlichen parallel zueinander angeordnet, wobei sich die Segmente durchgehend von einer Seitenkante des Funktionselementes zu einer gegenüberliegenden Seitenkante erstrecken.

In einer bevorzugten Ausführungsform sind an jedem Segment der ersten Flächenelektrode genau zwei erste Sammelleiter kontaktiert, die an gegenüberliegenden Seitenkanten des Funktionselementes auf das Segment aufgebracht sind und sich zwischen den das Segment begrenzenden Trennlinien, bzw. zwischen der Seitenkante des Funktionselementes und der Trennlinie, erstrecken. Diese beiden ersten Sammelleiter pro Segment sind jeweils flächig auf die erste Flächenelektrode des jeweiligen Segments aufgebracht und verlaufen benachbart zur jeweils nächstliegenden Seitenkante des Funktionselementes. Die Länge der Sammelleiter beträgt dabei bevorzugt mindestens 95 % der Segmentbreite. Diese Ausgestaltung der Erfindung ist hinsichtlich eines homogenen Schaltbildes des Funktionselementes (Sammelleiter beidseitig) und hinsichtlich einer möglichst großen Länge der Sammelleiter (nur jeweils ein Sammelleiter pro Seite) optimiert.

Die Anzahl der Segmente innerhalb der ersten Flächenelektrode kann je nach Anwendungsgebiet der Verglasung variieren und beträgt in der Regel zwischen 2 und 20, bevorzugt zwischen 3 und 10.

In einer ersten bevorzugten Ausführungsform ist auf der zweiten Flächenelektrode lediglich ein Sammelleiter angebracht, über den die gesamte zweite Flächenelektrode elektrisch leitend kontaktiert ist. Dies ist beispielsweise vorteilhaft, wenn das Funktionselement sich nicht über die gesamte Fläche der Verglasung erstreckt und eine Kante des Funktionselementes im Durchsichtbereich der Verglasung liegt. An dieser Seitenkante wird im Sinne einer ansprechenden Optik auf einen zweiten Sammelleiter verzichtet.

In einer zweiten bevorzugten Ausführungsform weist das Funktionselement mindestens einen weiteren zweiten Sammelleiter auf, wodurch eine homogenere Spannungsverteilung und ein gleichmäßigeres Schaltverhalten erreicht wird. Bevorzugt sind die zweiten Sammelleiter, im Sinne einer homogenen Spannungsverteilung, an gegenüberliegenden Seitenkanten des Funktionselementes jeweils benachbart zu diesen Seitenkanten angeordnet. Besonders bevorzugt weist die zweite Flächenelektrode genau zwei einander gegenüberliegende zweite Sammelleiter auf, wodurch die Länge der Sammelleiter jeweils entlang der Seitenkante des Funktionselementes maximiert werden kann.

Die Länge des mindestens einen zweiten Sammelleiters beträgt bei beiden beschriebenen Ausführungsformen mindestens 70 %, bevorzugt mindestens 90 % der Länge der nächstliegenden Seitenkante des Funktionselementes, wobei die Sammelleiter in Nachbarschaft zu einer der Seitenkanten des Funktionselementes angeordnet sind. Bevorzugt sind die zweiten Sammelleiter an der oder den Seitenkanten des Funktionselementes angeordnet, an denen sich keine ersten Sammelleiter befinden. Eine derartige Anordnung der ersten und zweiten Sammelleiter an unterschiedlichen Seitenkanten des Funktionselementes ermöglicht ein einfaches Aufbringen der Sammelleiter auf die Flächenelektroden, worauf im Zuge des Verfahrens zur Herstellung der erfindungsgemäßen Verbundscheibe detailliert eingegangen wird.

Die elektrische Kontaktierung der Sammelleiter mit einer externen Stromquelle ist durch geeignete Verbindungskabel, beispielsweise Folienleiter realisiert. Zur Ansteuerung der einzelnen Segmente sind dem Fachmann geeignete externe Steuerungselemente bekannt.

Die elektrische Regelung des Funktionselementes erfolgt beispielsweise mittels Knöpfen, Dreh- oder Schiebereglern, die beispielsweise in den Armaturen eines Fahrzeugs integriert sind. Es kann aber auch eine Schaltfläche zur Regelung in der Verbundscheibe integriert sein, beispielsweise eine kapazitive Schaltfläche. Alternativ kann das Funktionselement auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden.

Die Trennlinien sind so in die Flächenelektroden eingebracht, dass die Segmente der ersten Flächenelektrode elektrisch voneinander isoliert sind. Die einzelnen Segmente sind unabhängig voneinander mit der Spannungsquelle verbunden, so dass sie separat angesteuert werden können. So können verschiedene Bereiche des Funktionselementes unabhängig geschaltet werden. Besonders bevorzugt sind die Trennlinien und die Segmente in Einbaulage horizontal angeordnet. Damit kann die Höhe des intransparenten Bereichs des Funktionselementes vom Benutzer geregelt werden. Der Begriff "horizontal" ist hier breit auszulegen und bezeichnet eine Ausbreitungsrichtung, die zwischen den Seitenkanten der Verbundscheibe, beispielsweise den Seitenkanten einer Windschutzscheibe oder einer Dachscheibe, verläuft. Die Trennlinien müssen nicht notwendigerweise gerade sein, sondern können auch leicht gebogen sein, bevorzugt angepasst an eine eventuelle Biegung der nächstliegenden Scheibenkante, insbesondere im Wesentlichen parallel zur vorderen Dachkante einer Windschutzscheibe. Vertikale Isolierungslinien sind natürlich auch denkbar.

Die Trennlinien weisen beispielsweise eine Breite von 5 µm bis 500 µm, insbesondere 20 µm bis 200 µm auf. Die Breite der Segmente, also der Abstand benachbarter Trennlinien kann vom Fachmann gemäß den Anforderungen im Einzelfall geeignet gewählt werden.

Die Trennlinien können durch Laserablation, mechanisches Schneiden oder Ätzen während der Herstellung des Funktionselements eingebracht werden. Bereits laminierte Mehrschichtfolien können auch nachträglich noch mittels Laserablation segmentiert werden.

Die Sammelleiter (bus bars) sind beispielsweise als Streifen eines elektrisch leitfähigen Materials oder elektrisch leitfähige Aufdrucke, mit den Flächenelektroden verbunden. Bevorzugt sind die Sammelleiter als elektrisch leitfähige Aufdrucke umfassend Silber ausgeführt.

Die Sammeleiter sind jeweils flächig auf der ersten Flächenelektrode und der zweiten Flächenelektrode angebracht. Dies ist vorteilhaft hinsichtlich einer einfachen Aufbringung der Sammelleiter. Darüber hinaus ist eine flächige Kontaktierung hinsichtlich ihrer mechanischen Stabilität einer Kontaktierung über den Flächenquerschnitt vorzuziehen. Die Sammelleiter weisen bevorzugt jeweils einen Abstand von 1 mm bis 50 mm, besonders bevorzugt von 1 mm bis 5 mm, zur nächstliegenden Seitenkante des Funktionselementes auf.

Die Seitenkanten des Funktionselementes, in deren Nachbarschaft sich Sammelleiter auf dem Funktionselement befinden, werden bevorzugt in einem Abstand von 0 mm bis 100 mm, bevorzugt 1 mm bis 50 mm, besonders bevorzugt 1 mm bis 20 mm, von der umlaufenden Kante der Verbundscheibe angeordnet. Dadurch wird die mit dem Funktionselement ausgestattete Scheibenfläche vorteilhaft vergrößert. Des Weiteren können die Sammelleiter auf diese Weise durch den im Automobilbereich üblichen umlaufenden Abdeckdruck im Randbereich von Windschutzscheiben und Dachscheiben kaschiert werden. Seitenkanten eines Funktionselementes, an denen sich keine Sammelleiter befinden, können beispielsweise auch im nach Einbau sichtbaren Bereich der Verbundscheibe liegen.

In einer vorteilhaften Ausgestaltung ist das Funktionselement ein PDLC-Funktionselement (*polymer dispersed liquid crystal*). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt.

In weiteren möglichen Ausgestaltungen ist die aktive Schicht eine SPD-, eine elektrochrome oder eine elektrolumineszente Schicht.

Ein SPD-Funktionselement (*suspended particle device*) enthält eine aktive Schicht umfassend suspendierte Partikel, wobei die Absorption von Licht durch die aktive Schicht mittels Anlegen einer Spannung an die Flächenelektroden veränderbar ist. Die Absorptionsänderung beruht auf der Ausrichtung der stäbchenartigen Partikel im elektrischen Feld bei angelegter elektrischer Spannung. SPD-Funktionselemente sind beispielsweise aus EP 0876608 B1 und WO 2011033313 A1 bekannt.

Bei einem elektrochromen Funktionselement ist die aktive Schicht des Funktionselements eine elektrochemisch aktive Schicht. Die Transmission von sichtbarem Licht ist vom Einlagerungsgrad von Ionen in die aktive Schicht abhängig, wobei die Ionen beispielsweise durch eine Ionenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

Bei elektrolumineszenten Funktionselementen enthält die aktive Schicht elektrolumineszente Materialen, insbesondere organische elektrolumineszente Materialen, deren Lumineszenz durch Anlegen einer Spannung angeregt wird. Elektrolumineszente Funktionselemente sind beispielsweise aus US 2004227462 A1 und WO 2010112789 A2 bekannt. Das elektrolumineszente Funktionselement kann als einfache Lichtquelle verwendet werden, oder als Display mit dem beliebige Darstellungen gezeigt werden können.

In einer besonders bevorzugten Ausführungsform ist die Verbundscheibe eine Windschutzscheibe eines Kraftfahrzeugs. Die Windschutzscheibe umfasst eine Oberkante und eine Unterkante auf sowie zwei zwischen Oberkante und Unterkante verlaufende Seitenkanten. Die Oberkante, die Unterkante und die beiden Seitenkanten bilden in Summe die umlaufende Kante der Verbundscheibe. Mit Oberkante wird diejenige Kante bezeichnet, welche dafür vorgesehen ist, in Einbaulage nach oben in Richtung des Fahrzeugdachs zu weisen. Die Oberkante wird in der Regel als Dachkante oder vordere Dachkante bezeichnet. Mit Unterkante wird diejenige Kante bezeichnet, welche dafür vorgesehen ist, in Einbaulage nach unten in Richtung der Motorhaube des Fahrzeugs zu weisen. Die Unterkante als wird allgemein als Motorkante bezeichnet. Die Seitenkanten der Windschutzscheibe sind die im Einbauzustand den sogenannten A-Säulen der Fahrzeugkarosserie benachbarten Scheibenkanten.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement stellt in dieser Ausgestaltung der Windschutzscheibe eine Sonnenblende dar und ist oberhalb des zentralen Sichtfelds (Sichtfeld B) angeordnet. Das bedeutet, dass das Funktionselement im Bereich zwischen dem zentralen Sichtfeld und der vorderen Dachkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Die Zwischenschicht im zentralen Sichtfeld der Windschutzscheibe ist klar und transparent. Dadurch wird sichergestellt, dass die Durchsicht durch das zentrale Sichtfeld nicht eingeschränkt wird, so dass die Scheibe als Windschutzscheibe verwendet werden kann. Unter einer transparenten thermoplastischen Zwischenschicht wird eine Schicht mit einer Lichttransmission im sichtbaren Spektralbereich von mindestens 70 % bevorzugt mindestens 80% bezeichnet. Die transparente Zwischenschicht liegt zumindest im Sichtfeld A, bevorzugt auch im Sichtfeld B nach ECE-R43 vor.

Die Windschutzscheibe ist bevorzugt für ein Kraftfahrzeug vorgesehen, besonders bevorzugt für einen Personenkraftwagen.

Das Funktionselement als Sonnenblende verfügt über mehrere Lamellen, die in ihren Abmaßen und Anordnung den Segmenten der ersten Flächenelektrode entsprechen und selektiv geschaltet werden können. In der ersten Flächenelektrode sind mindestens zwei Trennlinien eingebracht, die im Wesentlichen parallel zur vorderen Dachkante verlaufen und die Flächenelektrode in mindestens drei Segmente unterteilen. Die Segmente erstrecken sich somit zwischen den beiden Seitenkanten der Windschutzscheibe. Jedes Segment der ersten Flächenelektrode wird dabei von jeweils zwei ersten Sammelleitern kontaktiert, die in Nachbarschaft der Seitenkanten auf der ersten Flächenelektrode angebracht sind. An jeder der Seitenkanten der Windschutzscheibe befindet sich demnach ein Sammelleiter pro Segment, jeweils benachbart zur jeweiligen nächstliegenden Seitenkante der Windschutzscheibe angeordnet. Die zweite Flächenelektrode des Funktionselementes ist über einen zweiten Sammelleiter, der benachbart zur vorderen Dachkante angeordnet ist, kontaktiert. Der zweite Sammelleiter verläuft im Wesentlichen parallel zur vorderen Dachkante. Die an den Seitenkanten befindlichen ersten Sammelleiter und der an der Dachkante angeordnete zweite Sammelleiter werden durch den üblicherweise bei Windschutzscheiben verwendeten opaken Abdeckdruck im Randbereich der Scheibe kaschiert. Die Windschutzscheibe mit verfügt somit über eine elektrisch schaltbare Sonnenblende mit homogenem Schaltverhalten, geringem Ausfallrisiko und ansprechendem Erscheinungsbild.

In einer möglichen Ausführungsform ist ein Bereich der thermoplastischen Zwischenschicht, über den das Funktionselement mit der Außenscheibe beziehungsweise der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der thermoplastischen Zwischenschicht erniedrigt somit die Transmission der Windschutzscheibe im Bereich der Sonnenblende. Insbesondere wird der ästhetische Eindruck des Funktionselements verbessert, weil die Tönung zu einem neutraleren Erscheinungsbild führt, das auf den Betrachter angenehmer wirkt.

Der getönte oder gefärbte Bereich der thermoplastischen Zwischenschicht weist bevorzugt eine Transmission im sichtbaren Spektralbereich von 10 % bis 50 % auf, besonders bevorzugt von 20 % bis 40 %. Damit werden besonders gute Ergebnisse erreicht hinsichtlich Blendschutz und optischem Erscheinungsbild.

Eine Windschutzscheibe mit elektrisch regelbarer Sonnenblende umfasst mindestens eine Außenscheibe und eine Innenscheibe, die über eine Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Innenraum (Fahrzeuginnenraum) zugewandte Scheibe der Windschutzscheibe bezeichnet. Mit Außenscheibe wird die der äußeren Umgebung zugewandte Scheibe bezeichnet. Die erste Scheibe und die zweite Scheibe der erfindungsgemäßen Verbundscheibe stellen die Innenscheibe und die Außenscheibe einer solchen Windschutzscheibe dar.

In einer weiteren bevorzugten Ausführungsform der erfindungsgemäßen Verbundscheibe wird diese als Dachscheibe eines Kraftfahrzeugs eingesetzt. Die Dachscheibe umfasst eine vordere Dachkante, die zur Windschutzscheibe des Fahrzeugs benachbart ist, eine hintere Dachkante, die in Richtung der Heckscheibe weist und zwei Seitenkanten, die entlang der Fahrzeugtüren zwischen vorderer Dachkante und hinterer Dachkante verlaufen. Das Funktionselement ist als großflächige Verschattung der Dachscheibe ausgestaltet, wobei das Funktionselement auf einer Fläche von mindestens 80 % des gesamten Durchsichtbereichs der Dachscheibe, bevorzugt mindestens 90 %, beispielsweise 100 %, des gesamten Durchsichtbereichs, angeordnet ist.

Das Funktionselement als Dachverschattung verfügt ebenfalls über mehrere Lamellen, die in ihren Abmaßen und Anordnung den Segmenten der ersten Flächenelektrode entsprechen und selektiv geschaltet werden können. Die Segmente eines solchen Fahrzeugdachs werden dabei wesentlich großflächiger gewählt als bei Sonnenblenden. Das Funktionselement wird so angeordnet, dass die Seitenkanten des Funktionselementes im Wesentlichen parallel zur jeweils nächstliegenden Kante (vordere Dachkante, hintere Dachkante, Seitenkanten) der Verbundscheibe verlaufen. In der ersten Flächenelektrode ist mindestens eine Trennlinie eingebracht, die im Wesentlichen parallel zur vorderen Dachkante der Verbundscheibe verläuft und die Flächenelektrode in mindestens zwei Segmente unterteilt. Das Funktionselement ist bevorzugt in 2 bis 6, besonders bevorzugt in 3 bis 4 Lamellen unterteilt, wobei die Lamellen im Wesentlichen orthogonal zur Fahrtrichtung des Fahrzeugs verlaufen. Die Segmente erstrecken sich somit zwischen den beiden Seitenkanten der Dachscheibe und die Trennlinien verlaufen von einer Seitenkante in Richtung der anderen Seitenkante. Jedes Segment der ersten Flächenelektrode wird von jeweils zwei ersten Sammelleitern kontaktiert, die in Nachbarschaft der Seitenkanten auf der ersten Flächenelektrode angebracht sind. An jeder der Seitenkanten der Dachscheibe befindet sich demnach ein Sammelleiter pro Segment. Die zweite Flächenelektrode des Funktionselementes ist über zwei zweite Sammelleiter, die benachbart zur vorderen Dachkante und zur hinteren Dachkante angeordnet sind, kontaktiert. Die zweiten Sammelleiter verlaufen dabei im Wesentlichen parallel zur nächstliegenden Dachkante (vordere Dachkante oder hintere Dachkante). Die an den Seitenkanten befindlichen ersten Sammelleiter und die an den Dachkanten angeordneten zweiten Sammelleiter werden durch den üblicherweise im Randbereich der Scheibe verwendeten opaken Abdeckdruck kaschiert. Auch die Dachscheibe mit schaltbarem Funktionselement weist demnach ein homogenes Schaltverhalten, ein geringes Ausfallrisiko und ansprechendes Erscheinungsbild auf.

In einer bevorzugten Ausführungsform der Dachscheibe ist der Bereich der thermoplastischen Zwischenschicht, über den das Funktionselement mit der Außenscheibe beziehungsweise der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der thermoplastischen Zwischenschicht erniedrigt somit die Transmission der Windschutzscheibe im Bereich der Sonnenblende. Der getönte oder gefärbte Bereich der thermoplastischen Zwischenschicht weist bevorzugt eine Transmission im sichtbaren Spektralbereich von 10 % bis 50 % auf, besonders bevorzugt von 20 % bis 40 %. Damit werden besonders gute Ergebnisse erreicht hinsichtlich Blendschutz und optischem Erscheinungsbild.

Die erste Scheibe und die zweite Scheibe der erfindungsgemäßen Verbundscheibe stellen die Innenscheibe und die Außenscheibe der Dachscheibe dar.

Die ersten Sammelleiter und die zweiten Sammelleiter umfassen eine elektrisch leitfähige Struktur, bevorzugt enthaltend Silber, und weisen eine Dicke von 5 µm bis 40 µm auf.

Die Sammelleiter sind dafür vorgesehene, mit einer externen Spannungsquelle verbunden zu werden, so dass ein elektrischer Potentialunterschied zwischen der ersten Flächenelektrode und der zweiten Flächenelektrode besteht.

Das Anbringen der Sammelleiter kann insbesondere durch Auflegen, Aufdrucken, Löten oder Kleben erfolgen.

In einer bevorzugten Ausführungsform sind die Sammelleiter als aufgedruckte und eingebrannte leitfähige Struktur ausgebildet. Die aufgedruckten Sammelleiter enthalten zumindest ein Metall, bevorzugt Silber. Die elektrische Leitfähigkeit wird bevorzugt über Metallpartikel, enthalten im Sammelleiter, besonders bevorzugt über Silberpartikel, realisiert. Die Metallpartikel können sich in einer organischen und / oder anorganischen Matrix wie Pasten oder Tinten befinden, bevorzugt als gebrannte Siebdruckpaste mit Glasfritten. Die Schichtdicke der aufgedruckten Sammelleiter beträgt bevorzugt von 5 µm bis 40 µm, besonders bevorzugt von 8 µm bis 20 µm und ganz besonders bevorzugt von 10 µm bis 15 µm. Aufgedruckte Sammelleiter mit diesen Dicken sind technisch einfach zu realisieren und weisen eine vorteilhafte Stromtragfähigkeit auf.

Alternativ sind die Sammelleiter als Streifen einer elektrisch leitfähigen Folie ausgebildet. Die Stromsammelschienen enthalten dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der Flächenelektrode beispielsweise über eine Lotmasse, über einen elektrisch leitfähigen Kleber oder ein elektrisch leitfähiges Klebeband oder durch direktes Auflegen elektrisch leitend verbunden sein. Zur Verbesserung der leitenden Verbindung kann zwischen Flächenelektrode und Sammelleiter beispielsweise eine silberhaltige Paste angeordnet werden.

Die erste Flächenelektrode und die zweite Flächenelektrode werden von jeweils einer elektrisch leitfähigen Schicht gebildet. Diese elektrisch leitfähigen Schichten enthalten zumindest ein Metall, eine Metalllegierung oder ein transparentes leitfähiges Oxid, bevorzugt ein transparentes leitfähiges Oxid, und weisen eine Dicke von 10 nm bis 2 µm auf. Die Flächenelektroden sind bevorzugt transparent. Transparent bedeutet hier durchlässig für elektromagnetische Strahlung, vorzugsweise elektromagnetische Strahlung einer Wellenlänge von 300 nm bis 1.300 nm und insbesondere für sichtbares Licht. Erfindungsgemäße elektrisch leitfähige Schichten sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Einzelschichten. Die funktionellen Einzelschichten enthalten bevorzugt zumindest ein Metall, beispielsweise Silber, Gold, Kupfer, Nickel und/oder Chrom, oder eine Metalllegierung. Die funktionellen Einzelschichten enthalten besonders bevorzugt mindestens 90 Gew. % des Metalls, insbesondere mindestens 99,9 Gew. % des Metalls. Die funktionellen Einzelschichten können aus dem Metall oder der Metalllegierung bestehen. Die funktionellen Einzelschichten enthalten besonders bevorzugt Silber oder eine silberhaltige Legierung. Solche funktionellen Einzelschichten weisen eine besonders vorteilhafte elektrische Leitfähigkeit bei gleichzeitiger hoher Transmission im sichtbaren Spektralbereich auf. Die Dicke einer funktionellen Einzelschicht beträgt bevorzugt von 5 nm bis 50 nm, besonders bevorzugt von 8 nm bis 25 nm. In diesem Dickenbereich wird eine vorteilhaft hohe Transmission im sichtbaren Spektralbereich und eine besonders vorteilhafte elektrische Leitfähigkeit erreicht.

Die Flächenelektroden können prinzipiell durch jede elektrisch leitfähige Schicht gebildet werden, die elektrisch kontaktiert werden kann.

Das Funktionselement liegt bevorzugt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine erste Trägerfolie, eine erste Flächenelektrode, eine aktive Schicht, eine zweite Flächenelektrode und eine zweite Trägerfolie.

Bevorzugt enthalten die erste Trägerfolie und/oder die zweite Trägerfolie zumindest ein im Autoklavprozess nicht vollständig aufschmelzendes Polymer, bevorzugt Polyethylenterephthalat (PET). Besonders bevorzugt bestehen die erste und die zweite Trägerfolie aus einer PET-Folie. Das ist besonders vorteilhaft im Hinblick auf die Stabilität der Mehrschichtfolie. Die Trägerfolien können aber auch beispielsweise Ethylenvinylacetat (EVA) und / oder Polyvinylbutyral (PVB), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen enthalten. Die Dicke jeder Trägerfolie beträgt bevorzugt von 0,1 mm bis 1 mm, besonders bevorzugt von 0,1 mm bis 0,2 mm. Die erfindungsgemäßen Trägerfolien sind bevorzugt transparent. Die Flächenelektroden sind bevorzugt auf einer Oberfläche der Trägerfolie angeordnet, das heißt auf genau einer der beiden Seiten der Trägerfolie (also auf deren Vorderseite oder deren Rückseite). Die Trägerfolien sind dabei im Schichtstapel der Mehrschichtfolie so ausgerichtet, dass die Flächenelektroden benachbart zur aktiven Schicht angeordnet sind.

Unter elektrisch regelbaren optischen Eigenschaften werden im Sinne der Erfindung solche Eigenschaften verstanden, die stufenlos regelbar sind, aber gleichermaßen auch solche, die zwischen zwei oder mehr diskreten Zuständen geschaltet werden können.

Das Funktionselement kann natürlich außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. Bei mechanisch geschnittenen Seitenkanten kann die Gefahr bestehen, dass sich das Material gleichsam zurückzieht, was optisch auffällig ist und die Ästhetik der Scheibe nachteilig beeinflusst.

In einer vorteilhaften Ausgestaltung weist das Funktionselement eine Randversiegelung auf. Die Randversiegelung bedeckt umlaufend die Seitenkante des Funktionselements und verhindert insbesondere die Diffusion von chemischen Bestandteilen der thermoplastischen Zwischenschicht, beispielsweise Weichmacher, in die aktive Schicht. Zumindest entlang der, bei Windschutzscheiben in Durchsicht sichtbaren, Unterkante des Funktionselements und bevorzugt entlang aller Seitenkanten ist die Randversiegelung durch einen transparenten farblosen Klebstoff oder ein transparentes farbloses Klebeband gebildet. Beispielsweise können acryl- oder silikonbasierte Klebebänder als Randversiegelung verwendet werden. Die transparente farblose Randversiegelung hat den Vorteil, dass die Kante des Funktionselements bei Durchsicht durch die Windschutzscheibe nicht störend auffällt. Bevorzugt wird eine derartige Randversiegelung auch bei nicht sichtbaren Seitenkanten, beispielsweise bei Dachscheiben oder an den von Abdeckdruck kaschierten Randbereichen der Windschutzscheibe angewandt.

Das Funktionselement ist über eine Zwischenschicht zwischen der ersten Scheibe und der zweiten Scheibe der Verbundscheibe eingebunden. Die Zwischenschicht umfasst dabei bevorzugt eine erste thermoplastische Verbundfolie, die das Funktionselement mit der ersten Scheibe verbindet, und eine zweite thermoplastische Verbundfolie, die das Funktionselement mit der zweiten Scheibe verbindet. Typischerweise wird die Zwischenschicht durch mindestens die erste und die zweite thermoplastische Verbundfolie gebildet, die flächig aufeinander angeordnet werden und miteinander laminiert werden, wobei das Funktionselement zwischen die beiden Schichten eingelegt wird. Die mit dem Funktionselement überlappenden Bereiche der Verbundfolien bilden dann die Bereiche, welche das Funktionselement mit den Scheiben verbinden. In anderen Bereichen der Scheibe, wo die thermoplastischen Verbundfolien direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine thermoplastische Verbundfolie kann beispielsweise durch eine einzige thermoplastische Folie ausgebildet werden. Eine thermoplastische Verbundfolie kann auch aus Abschnitten unterschiedlicher thermoplastischer Folien gebildet werden, deren Seitenkanten aneinandergesetzt sind. Zusätzlich zu einer ersten thermoplastischen Verbundfolie oder einer zweiten thermoplastischen Verbundfolie können auch weitere thermoplastische Verbundfolien vorhanden sein. Diese können bei Bedarf auch zur Einbettung weiterer Folien umfassend funktionelle Schichten, beispielsweise infrarotreflektierender Schichten oder akustisch dämpfender Schichten, genutzt werden.

Die thermoplastischen Verbundfolien können, wie bereits am Beispiel von Windschutzscheiben und Dachscheiben diskutiert, auch getönte oder gefärbte Bereiche enthalten. Solche Folien sind beispielsweise durch Koextrusion erhältlich. Alternativ können ein ungetönter Folienabschnitt und ein getönter oder gefärbter Folienabschnitt zur einer thermoplastischen Verbundfolie zusammengesetzt werden. Der getönte oder gefärbte Bereich kann homogen gefärbt oder getönt sein, das heißt eine ortsunabhängige Transmission aufweisen. Die Tönung oder Färbung kann aber auch inhomogenen sein, insbesondere kann ein Transmissionsverlauf realisiert sein. In einer Ausgestaltung einer Windschutzscheibe nimmt der Transmissionsgrad im getönten oder gefärbten Bereich zumindest abschnittsweise mit steigendem Abstand zur vorderen Dachkante der Windschutzscheibe ab. So können scharfe Kanten des getönten oder gefärbten Bereichs vermieden werden, so dass der Übergang von einer Sonnenblende in den transparenten Bereich der Windschutzscheibe graduell verläuft, was ästhetisch ansprechender wirkt.

In einer vorteilhaften Ausgestaltung ist der Bereich der thermoplastischen Verbundscheibe, die in Richtung einer als Außenscheibe eines Fahrzeugs verwendeten Scheibe orientiert ist, also der Bereich zwischen dem Funktionselement und der Außenscheibe getönt. Dies bewirkt einen besonders ästhetischen Eindruck des Fahrzeugs von außen betrachtet. Der Bereich der anderen thermoplastischen Verbundscheibe zwischen Funktionselement und Innenscheibe kann optional zusätzlich gefärbt oder getönt sein.

In einer bevorzugten Ausgestaltung ist das Funktionselement, genauer die Seitenkanten des Funktionselements umlaufend von einer thermoplastischen Rahmenfolie umgeben. Die Rahmenfolie ist rahmenartig ausgebildet mit einer Aussparung, in welche das Funktionselement eingelegt wird. Die thermoplastische Rahmenfolie kann durch eine thermoplastische Folie gebildet werden, in welche die Aussparung durch Ausschneiden eingebracht worden ist. Alternativ kann die thermoplastische Rahmenfolie auch aus mehreren Folienabschnitten um das Funktionselement zusammengesetzt werden. Die Zwischenschicht ist somit in einer bevorzugten Ausführungsform aus insgesamt mindestens drei flächig aufeinander angeordneten thermoplastischen Verbundfolien gebildet, wobei die Rahmenfolie als mittlere Schicht eine Aussparung ausweist, in der das Funktionselement angeordnet ist. Bei der Herstellung wird die thermoplastische Rahmenfolie zwischen der ersten und der zweiten thermoplastischen Verbundfolie angeordnet, wobei die Seitenkanten aller thermoplastischen Folien bevorzugt in Deckung befindlich sind. Die thermoplastische Rahmenfolie weist bevorzugt etwa die gleiche Dicke auf wie das Funktionselement. Dadurch wird der lokale Dickenunterschied der Windschutzscheibe, der durch das örtlich begrenzte Funktionselement eingebracht wird, kompensiert, so dass Glasbruch beim Laminieren vermieden werden kann.

Die in Durchsicht durch die Verbundscheibe sichtbaren Seitenkanten des Funktionselements sind bevorzugt bündig mit der thermoplastischen Rahmenfolie angeordnet, so dass zwischen der Seitenkante des Funktionselements und der zugeordneten Seitenkante der thermoplastischen Rahmenfolie keine Lücke existiert. Das gilt insbesondere für die Unterkante eines Funktionselements als Sonnenblende einer Windschutzscheibe, in der diese Kante typischerweise sichtbar ist. So ist die Grenze zwischen thermoplastischer Rahmenfolie und Funktionselement optisch unauffälliger.

Automobilverglasungen, insbesondere Windschutzscheiben, Heckscheiben und Dachscheiben, weisen meist einen umlaufenden peripheren Abdeckdruck aus einer opaken Emaille auf, der insbesondere dazu dient, den zum Einbau der Scheibe verwendeten Kleber vor UV-Strahlung zu schützen und optisch zu verdecken. Dieser periphere Abdeckdruck wird bevorzugt dazu verwendet, auch die Kanten des Funktionselementes zu verdecken, die sich im Randbereich der Verglasung befinden. Die Sammelleiter sowie die erforderlichen elektrischen Anschlüsse werden ebenfalls im Bereich des Abdeckdrucks angebracht. Das Funktionselement ist auf diese Weise vorteilhaft ins Erscheinungsbild der Verbundscheibe integriert. Bevorzugt weist zumindest die als Außenscheibe verwendete Scheibe einen solchen Abdeckdruck auf, besonders bevorzugt sind sowohl die erste Scheibe als auch die zweite Scheibe (Innenscheibe und Außenscheibe) bedruckt, so dass die Durchsicht von beiden Seiten gehindert wird.

Das Funktionselement kann auch Aussparungen oder Löcher aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein regelbares Funktionselement im Strahlengang beeinträchtigt werden würde, beispielsweise Regensensoren.

Das Funktionselement ist bevorzugt über die gesamte Breite der Verbundscheibe angeordnet, abzüglich eines beidseitigen Randbereichs mit einer Breite von beispielsweise 2 mm bis 20 mm. Auch zur Oberkante weist das Funktionselement bevorzugt einen Abstand von beispielsweise 2 mm bis 20 mm auf. Das Funktionselement ist so innerhalb der Zwischenschicht eingekapselt und vor Kontakt mit der umgebenden Atmosphäre und Korrosion geschützt.

Die erste thermoplastische Verbundfolie und die zweite thermoplastische Verbundfolie sowie gegebenenfalls auch die thermoplastische Rahmenfolie enthalten bevorzugt zumindest Polyvinylbutyral (PVB), Ethylenvinylacetat (EVA) und / oder Polyurethan (PU), besonders bevorzugt PVB.

Die Dicke jeder thermoplastischen Verbundfolie sowie der Rahmenfolie beträgt bevorzugt von 0,2 mm bis 2 mm, besonders bevorzugt von 0,3 mm bis 1 mm, insbesondere von 0,3 mm bis 0,5 mm, beispielsweise 0,38 mm.

Die erste Scheibe und die zweite Scheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar oder auch getönt oder gefärbt sein. Sofern die Verbundscheibe als Windschutzscheibe verwendet wird, sollte diese im zentralen Sichtbereich eine ausreichende Lichttransmission aufweisen, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der ersten Scheibe und der zweiten Scheibe kann breit variieren und so den Erfordernissen im Einzelfall angepasst werden. Die erste Scheibe und die zweite Scheibe weisen bevorzugt Dicken von 0,5 mm bis 5 mm auf, besonders bevorzugt von 1 mm bis 3 mm.

Die Erfindung umfasst außerdem ein Verfahren zur Herstellung einer erfindungsgemäßen Verbundscheibe, wobei zumindest
a) ein Funktionselement bereitgestellt wird,
b) in die erste Flächenelektrode des Funktionselementes mindestens eine Trennlinie eingebracht wird, die die erste Flächenelektrode in mindestens zwei Segmente unterteilt,
c) auf der ersten Flächenelektrode mindestens zwei erste Sammelleiter pro Segment angebracht werden,
d) auf der zweiten Flächenelektrode mindestens ein zweiter Sammelleiter angebracht wird,
e) auf eine erste Scheibe, zumindest eine erste thermoplastische Verbundfolie aufgelegt wird, auf die erste thermoplastische Verbundfolie das Funktionselement aufgelegt wird, auf dem Funktionselement zumindest eine zweite thermoplastische Verbundfolie und eine zweite Scheibe in dieser Reihenfolge übereinander angeordnet werden,
f) die erste Scheibe und die zweite Scheibe durch Lamination verbunden werden, wobei aus der ersten thermoplastischen Verbundfolie und der zweiten thermoplastischen Verbundfolie eine Zwischenschicht mit eingelagertem Funktionselement gebildet wird.

Das Funktionselement wird bevorzugt in Form einer Mehrschichtfolie umfassend in dieser Reihenfolge eine erste Trägerfolie, eine aktive Schicht und eine zweite Trägerfolie, bereitgestellt, wobei die Flächenelektroden auf den der aktiven Schicht zugewandten Oberflächen der Trägerfolien angebracht sind. Der Vorteil einer Mehrschichtfolie mit elektrisch schaltbaren optischen Eigenschaften liegt in einer einfachen Herstellung der Verglasung. Das eigentliche Funktionselement ist durch die Trägerfolien vorteilhaft vor Beschädigung, insbesondere Korrosion geschützt und kann vor der Herstellung der Verglasung auch in größerer Stückzahl bereitgestellt werden, was aus ökonomischen und verfahrenstechnischen Gründen wünschenswert sein kann. Die Mehrschichtfolie kann bei der Herstellung der Verbundscheibe einfach in den Verbund eingelegt werden, welcher dann mit herkömmlichen Verfahren laminiert wird.

Das Einbringen der mindestens einen Trennlinie in Schritt b) erfolgt bevorzugt mittels Laserverfahren. Die Trennlinien werden bevorzugt mittels laserinduzierter Degeneration innerhalb der Flächenelektroden erzeugt. Eine solche laserinduzierte Degeneration ist beispielsweise die Abtragung der Flächenelektrode oder eine chemische Veränderung der Flächenelektrode. Durch die laserinduzierte Degeneration wird eine Unterbrechung der elektrischen Leitfähigkeit der Schicht erreicht. Bevorzugt wird als Laser ein gepulster Festkörperlaser eingesetzt.

Die Trennlinien werden bevorzugt durch die, der zu bearbeitenden Flächenelektrode nächstliegende, Trägerfolie hindurch erzeugt. Der Laser wird dabei durch diese Trägerfolie hindurch auf die Flächenelektrode fokussiert.

Die elektrische Kontaktierung der Flächenelektroden des Funktionselements erfolgt bevorzugt nach dem Einbringen der Trennlinien, kann aber optional auch davor stattfinden.

Die Sammelleiter werden bevorzugt in Form einer aufgedruckten und eingebrannten leitfähigen Struktur realisiert. Die aufgedruckten Sammelleiter enthalten zumindest ein Metall, bevorzugt Silber. Geeignete Silberdruckpasten sind kommerziell erhältlich und dem Fachmann bekannt.

Zur gezielten Kontaktierung einer Flächenelektrode mit einem Sammelleiter ist diese zunächst aus der Mehrschichtfolie freizulegen. Dabei wird in einem ersten Schritt eine Trägerfolie der Mehrschichtfolie inklusive der auf der Trägerfolie befindlichen Flächenelektrode zurückgeschnitten. Die dadurch freigelegte aktive Schicht wird entfernt, beispielsweise durch mechanisches Abreiben unter Verwendung eines Lösungsmittels. Nach Entfernen der aktiven Schicht tritt die daran angrenzende Flächenelektrode zu tage und kann durch Aufdrucken des Sammelleiters elektrisch leitend kontaktiert werden.

Sofern mehrere Sammelleiter in Nachbarschaft zueinander angeordnet sind, wie beispielsweise bei einer Gruppe von ersten Sammelleitern entlang einer Kante, so erfolgt die Entschichtung des zu kontaktierenden Bereichs in der Regel für alle einander benachbarten Sammelleiter in einem Schritt. Um den Herstellungsprozess möglichst einfach zu gestalten, wird dabei auch der zwischen benachbarten ersten Sammelleitern liegende Bereich der Mehrschichtfolie entschichtet.

Sofern das beschriebene Verfahren zur Kontaktierung verwendet wird, erfolgt die Kontaktierung der ersten und der zweiten Sammelleiter auf der ersten bzw. zweiten Flächenelektrode ausgehend von unterschiedlichen Oberflächen der Mehrschichtfolie. Zur Kontaktierung einer ersten Flächenelektrode auf einer ersten Trägerfolie der erfolgt demnach ein Rückschnitt der zweiten Trägerfolie, Entfernung der aktiven Schicht und Aufbringen der Sammelleiter von Seiten der entfernten zweiten Trägerfolie. Analog dazu wird zur Kontaktierung der zweiten Flächenelektrode auf der zweiten Trägerfolie die erste Trägerfolie zurückgeschnitten. Die ersten Sammelleiter und die zweiten Sammelleiter liegen demnach bei Anwendung dieses Verfahrens nicht deckungsgleich.

Die Sammelleiter werden in dem Fachmann bekannter Weise mit Anschlusskabeln, beispielsweise in Form von Flachleitern, versehen, die aus dem Scheibenverbund herausgeführt werden um mit einer externen Stromquelle verbunden zu werden.

Eventuell vorhandene Drucke, beispielsweise opake Abdeckdrucke sowie aufgedruckte Sammelleiter zur elektrischen Kontaktierung des Funktionselements werden bevorzugt im Siebdruckverfahren aufgebracht.

Zum Einbinden des Funktionselementes in eine Verbundscheibe wird zunächst ein Schichtstapel der einzelnen Komponenten erzeugt. Dazu werden eine erste Scheibe und eine zweite Scheibe bereitgestellt, die als Innenscheibe und Außenscheibe der Verbundscheibe fungieren. Diese können planar oder gebogen, bevorzugt kongruent gebogen, sein. Auf eine erste Scheibe wird zumindest eine erste thermoplastische Verbundfolie aufgelegt. Auf die erste thermoplastische Verbundfolie wird das Funktionselement aufgelegt. Optional kann eine thermoplastische Rahmenfolie hinzugefügt werden, die das Funktionselement passepartoutartig umgibt. Auf dem Funktionselement wird zumindest eine zweite thermoplastische Verbundfolie und eine zweite Scheibe in dieser Reihenfolge übereinander angeordnet. Optional können über die genannten thermoplastischen Verbundfolien hinaus auch weitere thermoplastische Verbundfolien und/oder Trägerfolien mit funktionellen Schichten in den Verbund eingelegt werden.

Die erste Scheibe und die zweite Scheibe werden durch Lamination zu einer Verbundscheibe verbunden. Das Laminieren erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Die Erfindung umfasst außerdem die Verwendung einer erfindungsgemäßen Verbundscheibe als Gebäudeverglasung oder Fahrzeugverglasung, bevorzugt als Fahrzeugverglasung, insbesondere als Windschutzscheibe oder Dachscheibe eines Kraftfahrzeugs.

Die Erfindung wird anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein. Es zeigen:
- Figur 1a: eine Draufsicht auf eine Ausgestaltung einer erfindungsgemäßen Windschutzscheibe,
- Figur 1b: einen Querschnitt durch die erfindungsgemäße Windschutzscheibe aus Figur 1a entlang der Schnittlinie CC',
- Figur 2a: das Funktionselement 5 der Windschutzscheibe aus Figuren 1a und 1b,
- Figur 2b: einen Querschnitt durch das Funktionselement 5 aus Figur 2a entlang der Schnittlinie AA',
- Figur 2c: einen Querschnitt durch das Funktionselement 5 aus Figur 2a entlang der Schnittlinie BB',
- Figur 3: eine Draufsicht auf eine Ausgestaltung einer erfindungsgemäßen Dachscheibe,
- Figur 4a: das Funktionselement 5 der Dachscheibe aus Figur 3,
- Figur 4b: einen Querschnitt durch das Funktionselement 5 aus Figur 3b entlang der Schnittlinie EE',
- Figur 5: ein Ausführungsbeispiel des erfindungsgemäßen Verfahrens anhand eines Flussdiagramms.

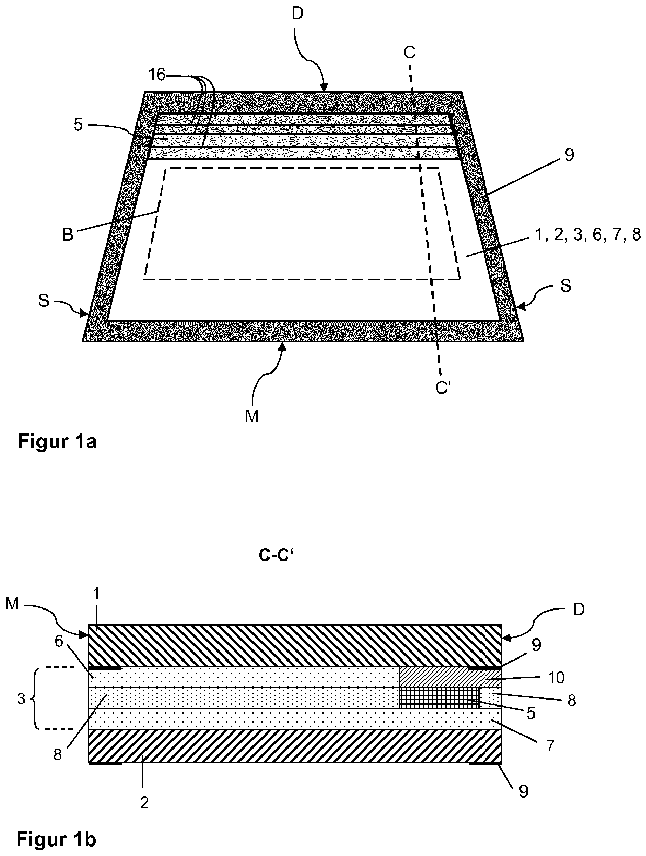

Figur 1a zeigt eine Draufsicht einer erfindungsgemäßen Verbundscheibe, die als Windschutzscheibe eines Kraftfahrzeugs ausgeführt ist. Figur 1b zeigt eine Querschnittsansicht der Windschutzscheibe gemäß Figur 1a entlang der Schnittlinie CC'. Die Windschutzscheibe umfasst eine erste Scheibe 1, die als Außenscheibe dient, und eine zweite Scheibe 2 als Innenscheibe. Die Innenscheibe ist dabei die zum Fahrzeuginnenraum gerichtete Scheibe, während die Außenscheibe zur Fahrzeugumgebung weist. Die erste Scheibe 1 und die zweite Scheibe 2 sind über eine Zwischenschicht 3 miteinander verbunden. Die erste Scheibe 1 weist eine Dicke von 2,1 mm auf und besteht aus einem grün eingefärbten Kalk-Natron-Glas. Die zweite Scheibe 2 weist eine Dicke von 1,6 mm auf und besteht aus einem klaren Kalk-Natron-Glas. Die Verbundscheibe als Windschutzscheibe weist eine in Einbaulage dem Dach zugewandte vordere Dachkante D und eine in Einbaulage dem Motorraum zugewandte Motorkante M auf.

Die Windschutzscheibe ist mit einem Funktionselement 5 als elektrisch regelbare Sonnenblende ausgestattet, das in einem Bereich oberhalb des zentralen Sichtbereichs B (wie in ECE-R43 definiert) angebracht ist. Die Sonnenblende ist durch eine kommerzielle erhältliche PDLC-Mehrschichtfolie als Funktionselement 5 gebildet, die in die Zwischenschicht 3 eingelagert ist. Die Höhe der Sonnenblende beträgt beispielsweise 21 cm. Die Zwischenschicht 3 umfasst insgesamt drei thermoplastischen Verbundfolien 6, 7, 8, die jeweils durch eine thermoplastische Folie mit einer Dicke von 0,38 mm aus PVB ausgebildet sind. Die erste thermoplastische Verbundfolie 6 ist mit der ersten Scheibe 1 verbunden, die zweite thermoplastische Verbundfolie 7 mit der zweiten Scheibe 2. Die dazwischenliegende thermoplastische Rahmenfolie 8 weist einen Ausschnitt auf, in welchen die zugeschnittene PDLC-Mehrschichtfolie passgenau, das heißt an allen Seiten bündig, eingelegt ist. Die dritte thermoplastische Schicht bildet also gleichsam eine Art Passepartout für das Funktionselement 5, welches somit rundum in thermoplastisches Material eingekapselt und dadurch geschützt ist. Die erste thermoplastische Verbundfolie 6 weist optional einen getönten Bereich 10 auf, der zwischen dem Funktionselement 5 und der ersten Scheibe 1 angeordnet ist. Die Lichttransmission der Windschutzscheibe ist dadurch im Bereich der Sonnenblende zusätzlich herabgesetzt und das milchige Aussehen des PDLC-Funktionselements 5 im diffusiven Zustand abgemildert. Die Ästhetik der Windschutzscheibe wird dadurch deutlich ansprechender gestaltet. Im dargestellten Fall sind die Unterkanten des getönten Bereichs 10 und des PDLC-Funktionselements 5 bündig angeordnet. Dies ist aber nicht notwendigerweise der Fall.

Die erfindungsgemäße Verbundscheibe weist in ihrer Ausführungsform als Windschutzscheibe gemäß Figur 1a einen umlaufenden Abdeckdruck 9 auf, der sowohl die Verklebung der Windschutzscheibe mit der Fahrzeugkarosserie als auch die elektrische Kontaktierung der Flächenelektroden des Funktionselementes 5 verdeckt. Der umlaufende periphere Abdeckdruck 9 ist durch ein opakes Emaille auf den innenraumseitigen Oberflächen (in Einbaulage dem Innenraum des Fahrzeugs zugewandt) der ersten Scheibe 1 und der zweiten Scheibe 2 ausgebildet. Der Abstand des Funktionselements 5 zur vorderen Dachkante D und den Seitenkanten der Windschutzscheibe ist kleiner als die Breite des Abdeckdrucks 9, so dass die Seitenkanten 4.1, 4.2, 4.4 des Funktionselements 5 - mit Ausnahme der zum zentralen Sichtfeld B weisenden Seitenkante 4.3 - durch den Abdeckdruck 9 verdeckt sind. Dabei werden auch die elektrischen Anschlüsse und Sammelleiter sinnvollerweise im Bereich des Abdeckdrucks 9 angebracht und somit vorteilhaft kaschiert.

In einer besonders komfortablen Ausgestaltung wird das Funktionselement 5 durch eine im Bereich der Sonnenblende angeordnete kapazitive Schaltfläche gesteuert, wobei der Fahrer durch den Ort, an dem er die Scheibe berührt, den Abdunklungsgrad festlegt. Alternativ kann die Sonnenblende auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden.

Die Seitenkanten des Funktionselements 5 sind umlaufend mit einer nicht gezeigten Randversiegelung versehen, die durch ein transparentes Acryl-Klebeband ausgebildet ist. Diffusion in die oder aus der aktiven Schicht 11 wird dadurch unterbunden. Da die Randversiegelung transparent ist, fällt auch die untere Seitenkante, welche nicht durch den Abdeckdruck 9 verdeckt ist, nicht störend auf. Die Randversiegelung verläuft umlaufend um die Seitenkanten der Mehrschichtfolie und erstreckt sich ausgehend von den Seitenkanten einige Millimeter über die von der aktiven Schicht 11 abgewandten Oberflächen der Trägerfolien 14, 15. Die Randversiegelung 10 verhindert insbesondere die Diffusion von Weichmachern und anderen Kleberbestandteilen der thermoplastischen Rahmenfolie 8 in die aktive Schicht 11, wodurch die Alterung des Funktionselements 5 vermindert wird.

Für die thermoplastischen Verbundfolien 6, 7 und die thermoplastische Rahmenfolie 8 kann bevorzugt ein sogenanntes "High Flow PVB" verwendet werden, welches im Vergleich zu Standard-PVB-Folien ein stärkeres Fließverhalten aufweist. So zerfließen die Schichten stärker um das Funktionselement 5 herum, wodurch ein homogenerer optischer Eindruck entsteht und der Übergang von Funktionselement 5 zu Rahmenfolie 8 weniger stark auffällt. Das "High Flow PVB" kann für alle oder auch nur für eine oder mehrere der thermoplastischen Folien 6, 7, 8 mit direktem Kontakt zum Funktionselement 5 verwendet werden.

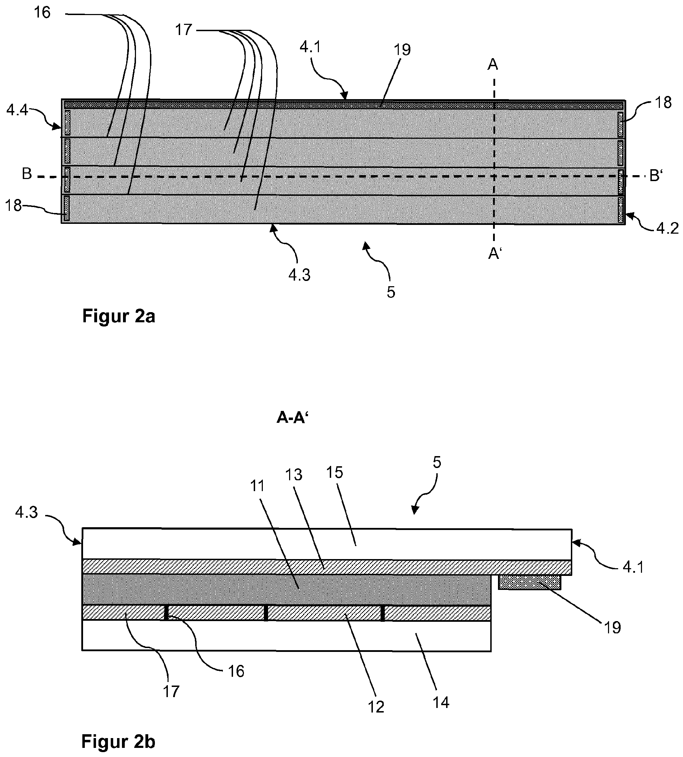

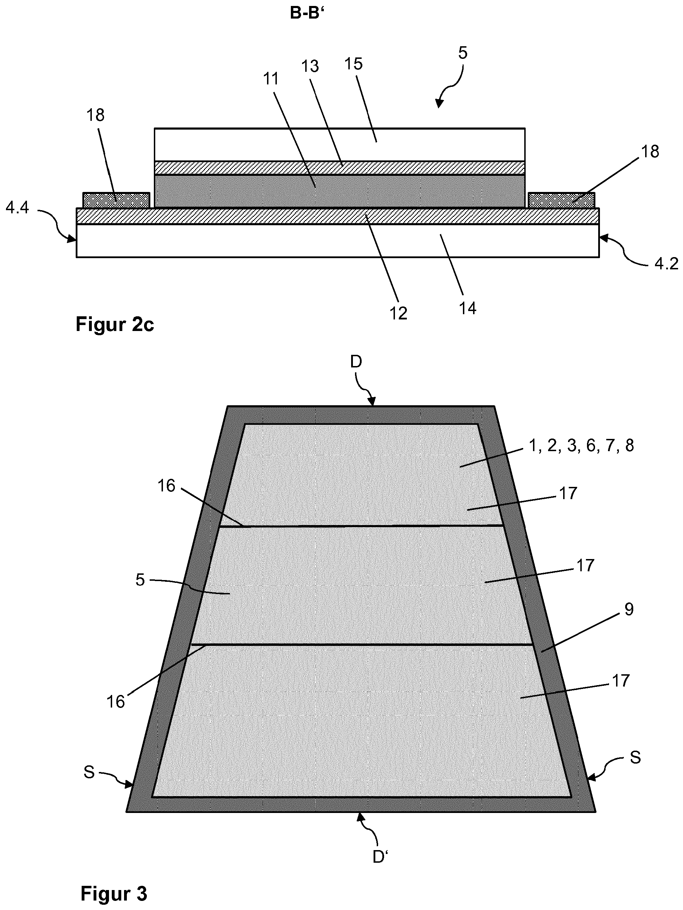

Figur 2a zeigt eine Draufsicht auf das Funktionselement 5 der Windschutzscheibe gemäß Figur 1a vor Integration des Funktionselementes 5 in die Windschutzscheibe, wobei auch die elektrische Kontaktierung des Funktionselementes 5 ersichtlich ist. Figuren 2b und 2c zeigen Querschnitte durch das Funktionselement gemäß Figur 2a entlang der Schnittlinie AA' bzw. BB'. Das regelbare Funktionselement 5 ist eine Mehrschichtfolie, bestehend aus einer aktiven Schicht 11 zwischen zwei Flächenelektroden 12, 13 und zwei Trägerfolien 14, 15. Die aktive Schicht 11 enthält eine Polymermatrix mit darin dispergierten Flüssigkristallen, die sich in Abhängigkeit der an die Flächenelektroden angelegten elektrischen Spannung ausrichten, wodurch die optischen Eigenschaften geregelt werden können. Die Trägerfolien 14, 15 bestehen aus PET und weisen eine Dicke von beispielsweise 0,125 mm auf. Die Trägerfolien 14, 15 sind mit einer zur aktiven Schicht 11 weisenden Beschichtung aus ITO mit einer Dicke von etwa 100 nm versehen, welche die erste Flächenelektrode 12 und die zweite Flächenelektrode 13 ausbilden. Die Flächenelektroden 12, 13 sind über Sammelleiter 18, 19 und nicht dargestellte Verbindungskabel mit der Bordelektrik verbindbar. Die Sammelleiter 18, 19 sind durch einen silberhaltigen Siebdruck ausgebildet. Die erste Flächenelektrode 12 weist drei Trennlinien 16 mit einer Breite von jeweils 200 µm auf, die mittels Laserverfahren eingebracht sind, und die die erste Flächenelektrode 12 in vier Segmente 17 unterteilt. Die Trennlinien weisen einen Abstand von ca. 5 cm zueinander bzw. im Falle der randständigen Segmente zur nächstliegenden Seitenkante 4.1, 4.3 auf. Die Trennlinien 16 isolieren die Segmente 17 elektrisch voneinander. Die Anzahl der Segmente 17 kann je nach Anwendung oder Kundenwunsch frei gewählt werden. Die erste Flächenelektrode 12 weist pro Segment 17 jeweils zwei erste Sammelleiter 18 auf, demnach insgesamt 8 erste Sammelleiter 18. Die einem Segment 17 zugeordneten beiden ersten Sammelleiter 18 befinden sich an einander gegenüberliegenden Seitenkanten 4.2, 4.4 des Funktionselementes 5. Die Seitenkanten 4.2, 4.4 des Funktionselementes 5, die die ersten Sammelleiter 18 beherbergen, sind in Einbaulage des Funktionselementes 5 an den Seitenkanten der Windschutzscheibe (benachbart der A-Säulen der Fahrzeugkarosserie) angeordnet. Figur 2c zeigt einen Querschnitt entlang der Schnittlinie BB', der die Kontaktierung der ersten Sammelleiter 18 auf der ersten Flächenelektrode 12 zeigt. Die zweite Trägerfolie 15, die zweite Flächenelektrode 13 und die aktive Schicht 11 sind in dem Bereich des Funktionselementes 5, der für die ersten Sammelleiter 18 vorgesehen ist, entfernt. Die ersten Sammelleiter 18 sind mittels Siebdruck auf die in dieser Weise freigelegte erste Flächenelektrode 12 aufgedruckt. Die ersten Sammelleiter 18 nehmen dabei eine maximal mögliche Breite entsprechend dem Abstand zwischen benachbarten Trennlinien 16 bzw. zwischen Trennlinie 16 und Seitenkante 4.1 bzw. 4.3 ein. Dabei ist darauf zu achten, dass der Sammelleiter ausschließlich innerhalb des zugeordneten Segmentes 17 aufgedruckt wird um einen Kurzschluss zwischen benachbarten Segmenten 17 zu verhindern. Der zweite Sammelleiter 19 stellt die elektrische Kontaktierung der zweiten Flächenelektrode 13 sicher. Dieser ist an der Seitenkante 4.1, die in Einbaulage des Funktionselementes 5 in Richtung der vorderen Dachkante weist, angebracht. Ein einzelner zweiter Sammelleiter 19 genügt in diesem Fall zur elektrischen Kontaktierung des Funktionselementes 5. Die dem zweiten Sammelleiter 19 gegenüberliegende Seitenkante 4.3 bleibt dabei frei, wodurch ein optisch ansprechender Übergang zur restlichen Verglasungsfläche gewährleistet wird. Im Bereich des zweiten Sammelleiters 19 ist gemäß Figur 2b die erste Trägerfolie 14 mitsamt der ersten Flächenelektrode 12 durch einen Rückschnitt der Folie entfernt. Die aktive Schicht 11 ist in diesem Bereich ebenfalls abgetragen. Auf die freiliegende zweite Flächenelektrode 13 ist der zweite Sammelleiter 19 aufgedruckt und kontaktiert dadurch die zweite Flächenelektrode 13 in diesem Bereich elektrisch.

Figur 3 zeigt eine Draufsicht auf eine Ausgestaltung einer erfindungsgemäßen Verbundscheibe als Dachscheibe. Die Dachscheibe umfasst eine erste Scheibe 1, die als Außenscheibe dient, und eine zweite Scheibe 2 als Innenscheibe. Die Innenscheibe ist dabei die zum Fahrzeuginnenraum gerichtete Scheibe, während die Außenscheibe zur Fahrzeugumgebung weist. Die erste Scheibe 1 und die zweite Scheibe 2 sind über eine Zwischenschicht 3 miteinander verbunden. Die erste Scheibe 1 besteht aus klarem Kalk-Natron-Glas mit einer Dicke von 2,1 mm. Die zweite Scheibe 2 besteht aus Kalk-Natron-Glas mit einer Dicke von 1,6 mm und ist grau getönt. Das getönte Innenglas trägt zur ansprechenden Erscheinung der Scheibe bei, auch für den Fahrzeuginsassen bei einem Blick durch die Dachscheibe. Die Verbundscheibe als Dachscheibe weist eine in Einbaulage der Windschutzscheibe zugewandte vordere Dachkante D und eine in Einbaulage der Heckscheibe zugewandte hintere Dachscheibe D' auf.

Die Dachscheibe ist mit einem Funktionselement 5 als großflächige Verschattung ausgestattet, wobei das Funktionselement durch eine kommerziell erhältliche PDLC-Mehrschichtfolie gebildet ist, die in die Zwischenschicht 3 eingelagert ist. Der Aufbau der Zwischenschicht 3 entspricht im Wesentlichen dem in Figur 1a und 1b beschriebenen, wobei sich im Unterscheid dazu das Funktionselement im gesamten Durchsichtbereich der Verglasung erstreckt. Auch in der Ausführungsform als Dachscheibe ist die Zwischenschicht 3 durch die drei thermoplastischen Verbundfolien 6, 7, 8, wie in Figuren 1a und 1b beschrieben, ausgebildet. Diese sind jeweils durch eine thermoplastische Folie mit einer Dicke von 0,38 mm aus PVB ausgebildet. Die erste thermoplastische Verbundfolie 6 ist mit der ersten Scheibe 1 verbunden, die zweite thermoplastische Verbundfolie 7 mit der zweiten Scheibe 2. Die dazwischenliegende thermoplastische Rahmenfolie 8 weist einen Ausschnitt auf, in welchen die zugeschnittene PDLC-Mehrschichtfolie passgenau, das heißt an allen Seiten bündig, eingelegt ist. Je nach Dicke der Mehrschichtfolie und daraus resultierendem Dickenunterschied zum Bereich ohne Funktionselement 5, kann auf die Rahmenfolie 8 verzichtet werden. Dies ist darüber hinaus abhängig von der Komplexität der Scheibenbiegung der Verbundscheibe. Allgemein lässt sich feststellen, dass bei geringen Dickenunterschieden zwischen Bereichen mit Funktionselement und Bereichen ohne Funktionselement sowie bei geringer Komplexität der Biegung auf eine Rahmenfolie verzichtet werden kann.

Die erste thermoplastische Verbundfolie 6 und die zweite thermoplastische Verbundfolie 7 sind grau getönt um das Erscheinungsbild der Dachscheibe ansprechend zu gestalten.

Optional kann eine weitere thermoplastische Verbundfolie (nicht gezeigt) benachbart zur Außenscheibe (erste Scheibe 1) eingebracht werden. Über die weitere thermoplastische Verbundfolie können beispielsweise Trägerfolien mit Funktionsschichten eingebunden werden, beispielsweise eine Trägerfolie mit einer infrarotreflektierenden Beschichtung. Die infrarotreflektierende Beschichtung wird dabei in Richtung der ersten Scheibe 1 (Außenscheibe) orientiert und dient dazu eine Erwärmung des Fahrgastinnenraums durch Sonneneinstrahlung zu vermindern.

Die erfindungsgemäße Dachscheibe weist ebenfalls den bereits für eine erfindungsgemäße Windschutzscheibe beschriebenen umlaufenden Abdeckdruck 9 auf, der sowohl die Verklebung der Windschutzscheibe mit der Fahrzeugkarosserie als auch die elektrische Kontaktierung der Flächenelektroden des Funktionselementes 5 verdeckt. Der Abstand des Funktionselements 5 zur vorderen Dachkante D, zur hinteren Dachkante D' und den Seitenkanten der Dachscheibe ist kleiner als die Breite des Abdeckdrucks 9, so dass die Seitenkanten 4.1, 4.2, 4.3, 4.4 des Funktionselements 5 durch den Abdeckdruck 9 verdeckt sind. Dabei werden auch die elektrischen Anschlüsse sinnvollerweise im Bereich des Abdeckdrucks 9 angebracht und somit vorteilhaft kaschiert.

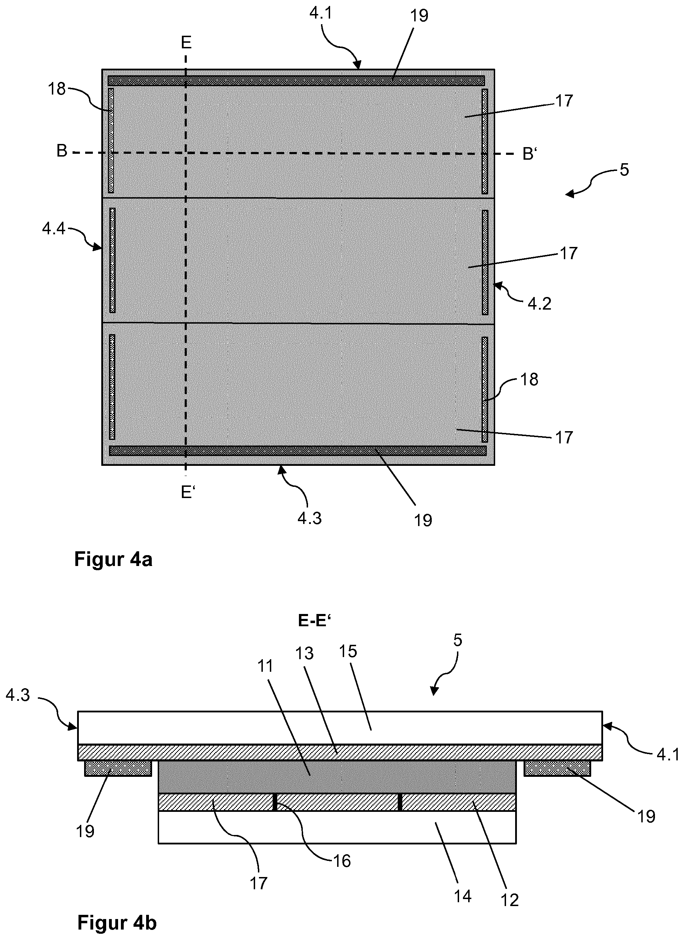

Figur 4a zeigt eine Draufsicht auf das Funktionselement 5 der Dachscheibe gemäß Figur 3 vor Integration des Funktionselementes 5 in die Verbundscheibe, wobei auch die elektrische Kontaktierung des Funktionselementes 5 ersichtlich ist. Figur 4b zeigt einen Querschnitt durch das Funktionselement gemäß Figur 4a entlang der Schnittlinie EE'. Das regelbare Funktionselement 5 ist eine Mehrschichtfolie, die in ihrer Zusammensetzung der in Figur 2a beschriebenen entspricht. Die erste Flächenelektrode 12 weist zwei Trennlinien 16 mit einer Breite von jeweils 200 µm auf, die mittels Laserverfahren eingebracht sind, und die die erste Flächenelektrode 12 in drei Segmente 17 unterteilen. Der Abstand der Trennlinien zueinander ist von der Größe der Dachscheibe abhängig, wobei der Durchsichtbereich der Scheibe von den Trennlinien in drei ungefähr flächenmäßig gleich große Teilbereiche gegliedert wird. Die Trennlinien 16 isolieren die Segmente 17 elektrisch voneinander. Die Anzahl der Segmente 17 kann je nach Anwendung oder Kundenwunsch frei gewählt werden. Die Kontaktierung der Segmente 17 entspricht im Wesentlichen der in Figuren 2a, 2b und 2c beschriebenen. Die erste Flächenelektrode 12 weist pro Segment 17 jeweils zwei erste Sammelleiter 18 auf, demnach insgesamt 6 erste Sammelleiter 18. Die einem Segment 17 zugeordneten beiden ersten Sammelleiter 18 befinden sich an einander gegenüberliegenden Seitenkanten 4.2, 4.4 des Funktionselementes 5. Die Seitenkanten 4.2, 4.4 des Funktionselementes 5, die die ersten Sammelleiter 18 beherbergen, sind in Einbaulage des Funktionselementes 5 an den Seitenkanten der Dachscheibe (oberhalb der Seitentüren des Fahrzeugs) angeordnet. Ein Querschnitt durch das Funktionselement gemäß Figur 4a entlang der Schnittlinie BB' entspricht in seinem schematischen Aufbau dem bereits in Figur 2c gezeigten. An dieser Stelle ist die Kontaktierung der ersten Sammelleiter 18 auf der ersten Flächenelektrode 12 eingehend beschrieben. Im Unterscheid zu dem in Figur 2a beschriebenen Funktionselement 5 als Sonnenblende, verfügt das als vollflächige Verschattung einer Dachscheibe vorgesehene Funktionselement 5 gemäß Figur 4a über einen zusätzlichen zweiten Sammelleiter 19. Da sämtliche Seitenkanten 4.1, 4.2, 4.3, 4.4 des Funktionselementes 5 außerhalb des Durchsichtbereichs der Scheibe liegen und vom peripheren Abdeckdruck 9 kaschiert werden, stehen sämtliche Seitenkanten für eine Kontaktierung der Flächenelektroden zur Verfügung. Ein zweiter Sammelleiter 19 ist analog zu dem in Figur 2a beschriebenen Funktionselement 5 an der vorderen Dachkante D der Dachscheibe angeordnet. An der gegenüberliegenden Seitenkante 4.3 des Funktionselementes 5 ist ein weiterer zweiter Sammelleiter 19 entlang der hinteren Dachkante D' angeordnet. Ein Querschnitt entlang der Schnittlinie EE' des Funktionselementes aus Figur 4a ist in Figur 4b gezeigt. Der Aufbau ist analog zu dem in Figur 2b beschriebenen, wobei im Unterschied dazu entlang zweier gegenüberliegender Seitenkanten 4.1 , 4.3 des Funktionselementes 5 in jeweils einem Bereich die erste Trägerfolie 14, die erste Flächenelektrode 12 und die aktive Schicht 11 entfernt sind und jeweils ein zweiter Sammelleiter 19 aufgedruckt ist.

Die Verwendung von zwei zweiten Sammelleitern 19 ist besonders vorteilhaft um auch bei großen Abmessungen des Funktionselementes 5 eine gleichmäßige Spannungsverteilung zu erreichen.

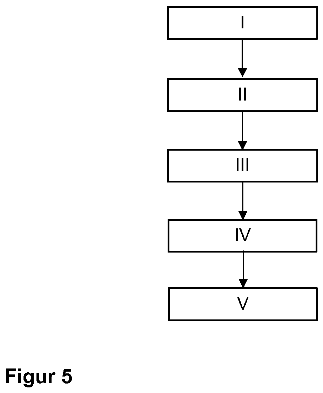

Figur 5 zeigt ein Ausführungsbeispiel des erfindungsgemäßen Herstellungsverfahrens anhand eines Flussdiagramms umfassen die Schritte:
I Bereitstellen eines Funktionselementes 5,
II Einbringen mindestens einer Trennlinie 16 mittels Laser in die erste Flächenelektrode 12 des Funktionselementes 5, wobei die mindestens eine Trennlinie 16 die erste Flächenelektrode 12 in mindestens zwei Segmente 17 unterteilt,
III Elektrische Kontaktierung der ersten Flächenelektrode 12 mit mindestens zwei ersten Sammelleitern 18 pro Segment 17
   und
   elektrische Kontaktierung der zweiten Flächenelektrode 13 mindestens einem zweiten Sammelleiter 19,
IV Erstellen eines Schichtstapels umfassend in dieser Reihenfolge mindestens: eine erste Scheibe 1, eine erste thermoplastische Verbundfolie 6, das Funktionselement 5, eine zweite thermoplastische Verbundfolie 7 und eine zweite Scheibe 2,
V Autoklavieren der Anordnung zur Herstellung einer Verbundscheibe

### Bezugszeichenliste:

- 1: erste Scheibe
- 2: zweite Scheibe
- 3: Zwischenschicht
- 4.1, 4.2, 4.3, 4.4: Seitenkanten
- 5: Funktionselement mit elektrisch regelbaren optischen Eigenschaften
- 6: erste thermoplastische Verbundfolie
- 7: zweite thermoplastische Verbundfolie
- 8: thermoplastische Rahmenfolie
- 9: Abdeckdruck
- 10: getönter Bereich der ersten thermoplastischen Verbundfolie
- 11: aktive Schicht des Funktionselements 5
- 12: erste Flächenelektrode des Funktionselements 5
- 13: zweite Flächenelektrode des Funktionselements 5
- 14: erste Trägerfolie
- 15: zweite Trägerfolie
- 16: Trennlinien
- 17: Segmente
- 18: erste Sammelleiter
- 19: zweite Sammelleiter

- D: vordere Dachkante
- D': hintere Dachkante
- M: Motorkante
- S: Seitenkanten

- A-A', B-B', C-C', E-E': Schnittlinie

## Patentansprüche

1. Verbundscheibe mit segmentartig schaltbarem elektrisch steuerbarem Funktionselement, mindestens umfassend eine erste Scheibe (1), eine zweite Scheibe (2), die über eine Zwischenschicht (3) miteinander verbunden sind und ein Funktionselement (5), das in der Zwischenschicht (3) eingelagert ist,
wobei
- das Funktionselement (5) flächig übereinander angeordnet eine erste Flächenelektrode (12) und eine zweite Flächenelektrode (13) umfasst, zwischen denen flächig eine aktive Schicht (11) angeordnet ist,
- das Funktionselement (5) mehrere Seitenkanten (4.1, 4.2, 4.3, 4.4) aufweist,
- die erste Flächenelektrode (12) mittels mindestens einer Trennlinie (16) in mehrere Segmente (17) unterteilt ist,
- eine Gruppe von ersten Sammelleitern (18) die erste Flächenelektrode (12) elektrisch leitend kontaktiert,
- mindestens ein zweiter Sammelleiter (19) die zweite Flächenelektrode (13) elektrisch leitend kontaktiert und
wobei jedes Segment (17) der ersten Flächenelektrode (12) von zwei Sammelleitern aus der Gruppe der ersten Sammelleiter (18) elektrisch leitend kontaktiert wird, die zwei ersten Sammelleiter (18), die das gleiche Segment (17) der ersten Flächenelektrode (12) kontaktieren, jeweils benachbart zu einander gegenüberliegenden Seitenkanten (4.2, 4.4) des Funktionselementes (5) angeordnet sind und der mindestens eine zweite Sammelleiter (19) benachbart zu einer der Seitenkanten (4.1, 4.3) des Funktionselementes (5), an denen sich kein Sammelleiter der Gruppe von ersten Sammelleitern (18) befindet, angebracht ist.

2. Verbundscheibe nach Anspruch 1, wobei die Länge der ersten Sammelleiter (18) zwischen 80 % und 100 % der Breite des kontaktierten Segments (17) beträgt, wobei die Breite des kontaktierten Segments (17) dem kürzesten Abstand der das Segment (17) begrenzenden Trennlinien (16) oder bei einem randständigen Segment (17) dem Abstand zwischen der Seitenkante (4.1, 4.3) des Funktionselementes (5) und der nächstliegenden Trennlinie (16) entspricht.

3. Verbundscheibe nach der Anspruch 1 oder 2, wobei die Länge des mindestens einen zweiten Sammelleiters (19) mindestens 70 %, bevorzugt mindestens 90 % der Länge der nächstliegenden Seitenkante (4.1, 4.3) des Funktionselementes (5) entspricht.

4. Verbundscheibe nach einem der Ansprüche 1 bis 3, wobei das Funktionselement (5) ein PDLC-Funktionselement ist.

5. Verbundscheibe nach einem der Ansprüche 1 bis 4, wobei das Funktionselement (5) mindestens zwei zweite Sammelleiter (19) aufweist und die mindestens zwei zweiten Sammelleiter (19) benachbart zu einander gegenüberliegenden Seitenkanten (4.1, 4.3) des Funktionselementes (5) angeordnet sind.

6. Verbundscheibe nach einem der Ansprüche 1 bis 4, wobei die Verbundscheibe eine Windschutzscheibe eines Kraftfahrzeugs, umfassend eine Motorkante (M), eine vordere Dachkante (D) und zwei Seitenkanten (S), ist, das Funktionselement (5) als Sonnenblende in Nachbarschaft zur vorderen Dachkante (D) ausgestaltet ist und wobei
- mindestens zwei Trennlinien (16) innerhalb der ersten Flächenelektrode (12) im Wesentlichen parallel zur vorderen Dachkante (D) verlaufen und die erste Flächenelektrode (12) in mindestens drei Segmente (17) unterteilen,
- ein zweiter Sammelleiter (19) benachbart zu der der Dachkante (D) nächstliegenden Seitenkante des Funktionselementes (5) verläuft und die zweite Flächenelektrode (13) elektrisch leitend kontaktiert,
- jedes Segment (17) der ersten Flächenelektrode (12) von jeweils zwei ersten Sammelleitern (18) kontaktiert wird und
- innerhalb jedes Segments (17) jeweils ein erster Sammelleiter (18) benachbart zu jeder der zwei Seitenkanten (S) der Windschutzscheibe auf der ersten Flächenelektrode (12) kontaktiert ist.

7. Verbundscheibe nach einem der Ansprüche 1 bis 5, wobei die Verbundscheibe eine Dachscheibe eines Kraftfahrzeugs umfassend eine vordere Dachkante (D), eine hintere Dachkante (D') und zwei Seitenkanten (S) ist, das Funktionselement (5) als großflächige Verschattung der Dachscheibe ausgestaltet ist und wobei
- mindestens eine Trennlinie (16) innerhalb der ersten Flächenelektrode (12) im Wesentlichen parallel zur vorderen Dachkante (D) und/oder hinteren Dachkante (D') verläuft und die erste Flächenelektrode (12) in mindestens zwei Segmente (17) unterteilt,
- ein zweiter Sammelleiter (19) im Wesentlichen parallel zur vorderen Dachkante (D), benachbart zu der der vorderen Dachkante (D) nächstliegenden Seitenkante des Funktionselementes (5), verläuft und die zweite Flächenelektrode (13) elektrisch leitend kontaktiert,
- ein weiterer zweiter Sammelleiter (19) im Wesentlichen parallel zur hinteren Dachkante (D') benachbart zu der der der hinteren Dachkante (D') nächstliegenden Seitenkante des Funktionselementes (5) verläuft und die zweite Flächenelektrode (13) elektrisch leitend kontaktiert,
- jedes Segment (17) der ersten Flächenelektrode (12) von jeweils zwei ersten Sammelleitern (18) kontaktiert wird und
- innerhalb jedes Segments (17) jeweils ein erster Sammelleiter (18) benachbart zu jeder der zwei Seitenkanten (S) der Dachscheibe auf der ersten Flächenelektrode (12) kontaktiert ist.

8. Verbundscheibe nach einem der Ansprüche 1 bis 7, wobei die ersten Sammelleiter (18) und die zweiten Sammelleiter (19) eine elektrisch leitfähige Struktur, bevorzugt enthaltend Silber, umfassen und eine Dicke von 5 µm bis 40 µm aufweisen.

9. Verbundscheibe nach einem der Ansprüche 1 bis 8, wobei die erste Flächenelektrode (12) und die zweite Flächenelektrode (13) zumindest ein Metall, eine Metalllegierung oder ein transparentes leitfähiges Oxid, bevorzugt ein transparentes leitfähiges Oxid, enthalten und eine Dicke von 10 nm bis 2 µm aufweisen.

10. Verbundscheibe nach einem der Ansprüche 1 bis 9, wobei die Zwischenschicht (3) eine erste thermoplastische Verbundfolie (6) aufweist, die zwischen Funktionselement (5) und erster Scheibe (1) angeordnet ist, und eine zweite thermoplastische Verbundfolie (7) aufweist, die zwischen Funktionselement (5) und zweiter Scheibe (2) angeordnet ist.

11. Verbundscheibe nach Anspruch 10, wobei das Funktionselement (5) umlaufend von einer thermoplastischen Rahmenfolie (8) umgeben ist, die zwischen der ersten thermoplastischen Verbundfolie (6) und der zweiten thermoplastischen Verbundfolie (7) angeordnet ist.

12. Verfahren zur Herstellung einer Verbundscheibe nach einem der Ansprüche 1 bis 11, wobei zumindest
a) ein Funktionselement (5) bereitgestellt wird,
b) in die erste Flächenelektrode (12) des Funktionselementes (5) mindestens eine Trennlinie (16) eingebracht wird, die die erste Flächenelektrode (12) in mindestens zwei Segmente (17) unterteilt,
c) auf der ersten Flächenelektrode (12) mindestens zwei erste Sammelleiter (18) pro Segment (17) angebracht werden,
d) auf der zweiten Flächenelektrode (13) mindestens ein zweiter Sammelleiter (19) angebracht wird,
e) auf eine erste Scheibe (1), zumindest eine erste thermoplastische Verbundfolie (6) aufgelegt wird, auf die erste thermoplastische Verbundfolie (6) das Funktionselement (5) aufgelegt wird, auf dem Funktionselement (5) zumindest eine zweite thermoplastische Verbundfolie (7) und eine zweite Scheibe (2) in dieser Reihenfolge übereinander angeordnet werden,
f) die erste Scheibe (1) und die zweite Scheibe (2) durch Lamination verbunden werden, wobei aus der ersten thermoplastischen Verbundfolie (6) und der zweiten thermoplastischen Verbundfolie (7) eine Zwischenschicht (3) mit eingelagertem Funktionselement (5) gebildet wird.

13. Verwendung einer Verbundscheibe nach einem der Ansprüche 1 bis 11 als Gebäudeverglasung oder Fahrzeugverglasung, bevorzugt als Fahrzeugverglasung, insbesondere als Windschutzscheibe oder Dachscheibe eines Kraftfahrzeugs.

## Claims

1. Laminated pane having an electrically controllable functional element which can be switched in segments, at least comprising a first pane (1), a second pane (2), which are connected to one another via an intermediate layer (3), and a functional element (5) which is embedded in the intermediate layer (3),
wherein
- the functional element (5) comprises a first planar electrode (12) and a second planar electrode (13) which are arranged one above the other in a planar manner and between which an active layer (11) is arranged in a planar manner,
- the functional element (5) has a plurality of side edges (4.1, 4.2, 4.3, 4.4),
- the first planar electrode (12) is divided into a plurality of segments (17) by means of at least one separating line (16),
- a group of first bus bars (18) electrically conductively contacts the first planar electrode (12),
- at least one second bus bar (19) electrically conductively contacts the second planar electrode (13), and
wherein each segment (17) of the first planar electrode (12) is electrically conductively contacted by two bus bars from the group of first bus bars (18), the two first bus bars (18) which contact the same segment (17) of the first planar electrode (12) are each arranged adjacent to opposite side edges (4.2, 4.4) of the functional element (5) and the at least one second bus bar (19) is attached adjacent to one of the side edges (4.1, 4.3) of the functional element (5) on which no bus bar of the group of first bus bars (18) is located.

2. Laminated pane according to claim 1, wherein the length of the first bus bars (18) is between 80% and 100% of the width of the contacted segment (17), wherein the width of the contacted segment (17) corresponds to the shortest distance between the separating lines (16) delimiting the segment (17) or, in the case of a marginal segment (17), to the distance between the side edge (4.1, 4.3) of the functional element (5) and the closest separating line (16).

3. Laminated pane according to either claim 1 or claim 2, wherein the length of the at least one second bus bar (19) corresponds to at least 70%, preferably at least 90%, of the length of the closest side edge (4.1, 4.3) of the functional element (5).

4. Laminated pane according to any of claims 1 to 3, wherein the functional element (5) is a PDLC functional element.

5. Laminated pane according to any of claims 1 to 4, wherein the functional element (5) has at least two second bus bars (19), and the at least two second bus bars (19) are arranged adjacent to opposite side edges (4.1, 4.3) of the functional element (5).

6. Laminated pane according to any of claims 1 to 4, wherein the laminated pane is a windscreen of a motor vehicle, comprising a motor edge (M), a front roof edge (D) and two side edges (S), the functional element (5) is designed as a sunshade in the vicinity of the front roof edge (D), and wherein
- at least two separating lines (16) within the first planar electrode (12) extend substantially parallel to the front roof edge (D) and divide the first planar electrode (12) into at least three segments (17),
- a second bus bar (19) extends adjacent to the side edge of the functional element (5) that is closest to the roof edge (D), and electrically conductively contacts the second planar electrode (13),
- each segment (17) of the first planar electrode (12) is contacted by two first bus bars (18) in each case, and
- within each segment (17) a first bus bar (18) is contacted adjacent to each of the two side edges (S) of the windscreen on the first planar electrode (12).

7. Laminated pane according to any of claims 1 to 5, wherein the laminated pane is a roof panel of a motor vehicle, comprising a front roof edge (D), a rear roof edge (D') and two side edges (S), the functional element (5) is designed as a large-area shade of the roof panel, and wherein
- at least one separating line (16) within the first planar electrode (12) extends substantially parallel to the front roof edge (D) and/or rear roof edge (D') and divides the first planar electrode (12) into at least two segments (17),
- a second bus bar (19) extends substantially parallel to the front roof edge (D) adjacent to the side edge of the functional element (5) that is closest to the front roof edge (D), and electrically conductively contacts the second planar electrode (13),
- a further second bus bar (19) extends substantially parallel to the rear roof edge (D') adjacent to the side edge of the functional element (5) that is closest to the rear roof edge (D'), and electrically conductively contacts the second planar electrode (13),
- each segment (17) of the first planar electrode (12) is contacted by two first bus bars (18) in each case, and
- within each segment (17) a first bus bar (18) is contacted adjacent to each of the two side edges (S) of the roof panel on the first planar electrode (12).

8. Laminated pane according to any of claims 1 to 7, wherein the first bus bars (18) and the second bus bars (19) have an electrically conductive structure, preferably containing silver, and have a thickness of 5 µm to 40 µm.

9. Laminated pane according to any of claims 1 to 8, wherein the first planar electrode (12) and the second planar electrode (13) contain at least one metal, a metal alloy, or a transparent conductive oxide, preferably a transparent conductive oxide, and have a thickness of 10 nm to 2 µm.

10. Laminated pane according to any of claims 1 to 9, wherein the intermediate layer (3) has a first thermoplastic laminated film (6) which is arranged between the functional element (5) and the first pane (1), and a second thermoplastic laminated film (7) which is arranged between the functional element (5) and the second pane (2).

11. Laminated pane according to claim 10, wherein the functional element (5) is peripherally surrounded by a thermoplastic frame film (8) which is arranged between the first thermoplastic laminated film (6) and the second thermoplastic laminated film (7).

12. Method for producing a laminated pane according to any of claims 1 to 11, wherein at least
a) a functional element (5) is provided,
b) at least one separating line (16) is introduced into the first planar electrode (12) of the functional element (5), which separating line divides the first planar electrode (12) into at least two segments (17),
c) at least two first bus bars (18) per segment (17) are attached to the first planar electrode (12),
d) at least one second bus bar (19) is attached to the second planar electrode (13),
e) at least one first thermoplastic laminated film (6) is placed onto a first pane (1), the functional element (5) is placed onto the first thermoplastic laminated film (6), and at least one second thermoplastic laminated film (7) and a second pane (2), in this order, are arranged one above the other on the functional element (5),
f) the first pane (1) and the second pane (2) are connected by lamination, wherein an intermediate layer (3) having an embedded functional element (5) is formed from the first thermoplastic laminated film (6) and the second thermoplastic laminated film (7).

13. Use of a laminated pane according to any of claims 1 to 11 as building glazing or vehicle glazing, preferably as vehicle glazing, in particular as a windscreen or roof panel of a motor vehicle.

## Revendications

1. Vitrage feuilleté comportant un élément fonctionnel pouvant être commandé électriquement et commutable à la manière d'un segment, comprenant au moins une première vitre (1), une seconde vitre (2), lesquelles sont reliées entre elles par l'intermédiaire d'une couche intermédiaire (3), et un élément fonctionnel (5) incorporé dans la couche intermédiaire (3),
dans lequel
- l'élément fonctionnel (5) comprend, superposées en surface, une première électrode de surface (12) et une seconde électrode de surface (13), entre lesquelles est disposée en surface une couche active (11),
- l'élément fonctionnel (5) présente plusieurs bords latéraux (4.1, 4.2, 4.3, 4.4),
- la première électrode de surface (12) est divisée en plusieurs segments (17) au moyen d'au moins une ligne de séparation (16),
- un groupe de premières barres omnibus (18) entre en contact électriquement conducteur avec la première électrode de surface (12),
- au moins une seconde barre omnibus (19) entre en contact électriquement conducteur avec la seconde électrode de surface (13) et
dans lequel chaque segment (17) de la première électrode de surface (12) entre en contact électriquement conducteur avec deux barres omnibus du groupe des premières barres omnibus (18), les deux premières barres omnibus (18), lesquelles entrent en contact avec le même segment (17) de la première électrode de surface (12), sont respectivement disposées de manière adjacente à des bords latéraux (4.2, 4.4) opposés l'un à l'autre de l'élément fonctionnel (5) et l'au moins une seconde barre omnibus (19) est placée de manière adjacente à l'un des bords latéraux (4.1, 4.3) de l'élément fonctionnel (5) sur lequel aucune barre omnibus du groupe de premières barres omnibus (18) ne se trouve.

2. Vitrage feuilleté selon la revendication 1, dans lequel la longueur des premières barres omnibus (18) est comprise entre 80 % et 100 % de la largeur du segment (17) mis en contact, dans lequel la largeur du segment (17) mis en contact correspond à la distance la plus courte entre les lignes de séparation (16) délimitant le segment (17) ou, en cas de segment (17) près du bord, à la distance entre le bord latéral (4.1, 4.3) de l'élément fonctionnel (5) et la ligne de séparation (16) la plus proche.

3. Vitrage feuilleté selon la revendication 1 ou 2, dans lequel la longueur de l'au moins une seconde barre omnibus (19) correspond à au moins 70 %, de préférence à au moins 90 %, de la longueur du bord latéral (4.1, 4.3) le plus proche de l'élément fonctionnel (5).

4. Vitrage feuilleté selon l'une des revendications 1 à 3, dans lequel l'élément fonctionnel (5) est un élément fonctionnel PDLC.

5. Vitrage feuilleté selon l'une des revendications 1 à 4, dans lequel l'élément fonctionnel (5) présente au moins deux secondes barres omnibus (19) et les au moins deux secondes barres omnibus (19) sont disposées de manière adjacente à des bords latéraux (4.1, 4.3) opposés l'un à l'autre de l'élément fonctionnel (5).

6. Vitrage feuilleté selon l'une des revendications 1 à 4, dans lequel le vitrage feuilleté est un pare-brise d'un véhicule automobile, comprenant un bord côté moteur (M), un bord côté toit avant (D) et deux bords latéraux (S), l'élément fonctionnel (5) est réalisé sous forme de pare-soleil adjacent au bord côté toit avant (D) et dans lequel
- au moins deux lignes de séparation (16) s'étendent à l'intérieur de la première électrode de surface (12) sensiblement parallèlement au bord côté toit avant (D) et divisent la première électrode de surface (12) en au moins trois segments (17),
- une seconde barre omnibus (19) s'étend de manière adjacente au bord latéral de l'élément fonctionnel (5), lequel bord latéral est le plus proche du bord côté toit (D), et entre en contact électriquement conducteur avec la seconde électrode de surface (13),
- chaque segment (17) de la première électrode de surface (12) entre en contact avec respectivement deux premières barres omnibus (18) et
- à l'intérieur de chaque segment (17), respectivement une première barre omnibus (18) adjacente à chacun des deux bords latéraux (S) du pare-brise entre en contact avec la première électrode de surface (12).

7. Vitrage feuilleté selon l'une des revendications 1 à 5, dans lequel le vitrage feuilleté est une vitre de toit d'un véhicule automobile comprenant un bord côté toit avant (D), un bord côté toit arrière (D') et deux bords latéraux (S), l'élément fonctionnel (5) est réalisé sous forme d'ombrage de grande surface de la vitre de toit et dans lequel
- au moins une ligne de séparation (16) s'étend à l'intérieur de la première électrode de surface (12) sensiblement parallèlement au bord côté toit avant (D) et/ou au bord côté toit arrière (D') et divise la première électrode de surface (12) en au moins deux segments (17),
- une seconde barre omnibus (19) s'étend sensiblement parallèlement au bord côté toit avant (D) de manière adjacente au bord latéral de l'élément fonctionnel (5), lequel bord latéral est le plus proche du bord côté toit avant (D), et entre en contact électriquement conducteur avec la seconde électrode de surface (13),
- une autre seconde barre omnibus (19) s'étend sensiblement parallèlement au bord côté toit arrière (D') de manière adjacente au bord latéral de l'élément fonctionnel (5), lequel bord latéral est le plus proche du bord côté toit arrière (D'), et entre en contact électriquement conducteur avec la seconde électrode de surface (13),
- chaque segment (17) de la première électrode de surface (12) entre en contact avec respectivement deux premières barres omnibus (18) et
- à l'intérieur de chaque segment (17), respectivement une première barre omnibus (18) adjacente à chacun des deux bords latéraux (S) de la vitre de toit entre en contact avec la première électrode de surface (12).

8. Vitrage feuilleté selon l'une des revendications 1 à 7, dans lequel les premières barres omnibus (18) et les secondes barres omnibus (19) comprennent une structure électriquement conductrice, de préférence contenant de l'argent, et présentent une épaisseur allant de 5 µm à 40 µm.

9. Vitrage feuilleté selon l'une des revendications 1 à 8, dans lequel la première électrode de surface (12) et la seconde électrode de surface (13) contiennent au moins un métal, un alliage métallique ou un oxyde conducteur transparent, de préférence un oxyde conducteur transparent, et présentent une épaisseur allant de 10 nm à 2 µm.

10. Vitrage feuilleté selon l'une des revendications 1 à 9, dans lequel la couche intermédiaire (3) présente un premier film composite thermoplastique (6) disposé entre l'élément fonctionnel (5) et la première vitre (1), et un second film composite thermoplastique (7) disposé entre l'élément fonctionnel (5) et la seconde vitre (2).

11. Vitrage feuilleté selon la revendication 10, dans lequel l'élément fonctionnel (5) est entouré de manière circonférentielle par un film formant cadre thermoplastique (8) disposé entre le premier film composite thermoplastique (6) et le second film composite thermoplastique (7).

12. Procédé de fabrication d'un vitrage feuilleté selon l'une des revendications 1 à 11, dans lequel au moins
a) un élément fonctionnel (5) est fourni,
b) au moins une ligne de séparation (16) est introduite dans la première électrode de surface (12) de l'élément fonctionnel (5), laquelle ligne de séparation divise la première électrode de surface (12) en au moins deux segments (17),
c) au moins deux premières barres omnibus (18) par segment (17) sont montées sur la première électrode de surface (12),
d) au moins une seconde barre omnibus (19) est montée sur la seconde électrode de surface (13),
e) au moins un premier film composite thermoplastique (6) est posé sur une première vitre (1), l'élément fonctionnel (5) est posé sur le premier film composite thermoplastique (6), au moins un second film composite thermoplastique (7) et une seconde vitre (2) sont superposés dans cet ordre sur l'élément fonctionnel (5),
f) la première vitre (1) et la seconde vitre (2) sont reliées par stratification, dans lequel une couche intermédiaire (3) comportant un élément fonctionnel (5) incorporé est formée à partir du premier film composite thermoplastique (6) et du second film composite thermoplastique (7).

13. Utilisation d'un vitrage feuilleté selon l'une des revendications 1 à 11 en tant que vitrage de bâtiment ou vitrage de véhicule, de préférence en tant que vitrage de véhicule, en particulier en tant que pare-brise ou vitre de toit d'un véhicule automobile.
